# EUROPEAN PATENT SPECIFICATION

(11) **EP 2 159 691 B1**
(45) Date of publication and mention of the grant of the patent: **28.08.2013**
(21) Application number: 07790188.2
(22) Date of filing: 20.06.2007
(51) Int. Cl.: G06F 9/38, G06F 9/50

(54) **SIMULTANEOUS MULTITHREADED INSTRUCTION COMPLETION CONTROLLER**
GLEICHZEITIGE MEHRTHREAD-ANWEISUNGSABSCHLUSSSTEUERUNG
CONTRÔLEUR D'ACHÈVEMENT D'INSTRUCTION MULTIFILE SIMULTANÉ

(43) Date of publication of application: 03.03.2010
(73) Proprietor: Fujitsu Limited, Kawasaki-shi, Kanagawa 211-8588 (JP)
(72) Inventor: AKIZUKI, Yasunobu, Kawasaki-shi Kanagawa 211-8588 (JP)
(74) Representative: Wilding, Frances Ward
(86) International application number: PCT/JP2007/000662
(87) International publication number: WO 2008/155804

(56) References cited:
- JP-A- 2006 343 872
- US-A1- 2004 210 743
- US-A1- 2005 138 333
- US-B1- 6 357 016
- NOBUYUKI YAMASAKI ED - ANONYMOUS: "Responsive Multithreaded Processor for Distributed Real-Time Processing" INNOVATIVE ARCHITECTURE FOR FUTURE GENERATION HIGH PERFORMANCE PROCESS ORS AND SYSTEMS, 2006. IWIA '06. INTERNATIONAL WORKSHOP ON, IEEE, PI, 1 January 2006 (2006-01-01), pages 44-56, XP031044039 ISBN: 978-0-7695-2689-8

## Description

### FIELD

The present invention relates to an instruction completion controller in a CPU for simultaneously processing a plurality of threads.

### BACKGROUND

Various techniques have been conventionally used as means for quickly performing the processes by the CPU. The means can be pipeline processing and a superscalar system for concurrently performing the processes. There is also an out-of-order execution system for executing an instruction for which input data are prepared regardless of the order of program instructions.

However, in these systems, when a cache miss occurs depending on the type of program being executed, there is time in which the CPU cannot perform processing until data is received. Although the CPU is operating, there are a number of circuits not operating in many places.

For example, when programmable resources (hardware resources recognized by software such as an architecture register, memory, etc.) are updated (released etc.) after completing instructions in the order of the program, and if the oldest instruction has not been completed, the completion of the execution of the instruction has to be awaited, and the resources cannot be updated during the wait state. In addition, there is also the situation in which unused resources exist, or although some resources are being used, they may not be fully utilized.

To reduce the situation in which the CPU is not operating, a multithread system for improvement by not running a single program but running a plurality of programs has been used. In the multithread system for running a plurality of programs, software apparently considers a plurality of CPUs by preparing plural sets of programmable resources for a CPU, thereby enabling a plurality of programs to be executed.

A VMT (vertical multithreading) system is used as one of the multithread systems. The system focuses attention on the very long access time of the memory as compared with the speed of the execution of the CPU. Although the CPU can run only one program, it can switch to another program when it is clear that the currently running program has a cache miss and a long waiting time is predicted. When a cache miss occurs, the CPU can switch the execution to another program, thereby possibly reduce the state in which the CPU performs nothing. Relating to the number of circuits in the VMT system, programmable resources have to be prepared for each thread. However, since there is no change of circuits basically operated by one program, only a small number of circuits are to be added, and the system can be practically realized.

This system is effective when a long waiting time is predicted due to a cache miss etc. However, in a normal operating state, it is still difficult to use all resources and circuits not operating in many places. To operate these circuits and resources more effectively, the operation rate of the CPU can be improved by simultaneously running the programs. The system of simultaneously running a plurality of programs is called a simultaneous multithreading (SMT) system.

In the simultaneous multithreading system, a plurality of threads are simultaneously operating. Therefore, a thread stops, but other threads can operate, thereby improving the operation rate as viewed from the entire CPU, and also improving the use rate of the resources. However, since a plurality of threads are processed, the number of circuits greatly increases if the circuit of each function is simply added for each thread, and it is difficult to improve the operation frequency. In addition, increasing the number of circuits also implies a complicated control method.

When a configuration and control for the simultaneous multithreading system of a CSE for determining the completion of an instruction and controlling the update of resources in the simultaneous multithreading system in which a plurality of threads are operated, it is necessary to minimize the number of circuits to be added as compared with the operation by a single thread only, and control the configuration of the CSE for maintaining or improving the operation frequency, the determination of the completion of an instruction, and the update of resources.

The patent document 1 describes the operation of the CSE (commit stack entry). The patent document 2 discloses the technique of processing the execution of a suspend instruction in a multithread processor. The patent document 3 discloses the technique of dispatching a new instruction group at the highest possible speed in an SMT system.
Patent Document 1: Japanese Laid-open Patent Publication No. 2000-20306 (Japanese Patent No. 3469469)
Patent Document 2: National Publication of International Patent Application No. 2005-514698
Patent Document 3: Japanese Laid-open Patent Publication No. 2004-326738
US 2005138333 A1 refers to a thread switching mechanism for supporting for multiple SoEMT software threads on multiple SMT logical processors. A thread switch on a given logical processor may be accomplished without interrupting operation of other physical threads. Microarchitectural state for a current virtual thread is "torpedoed" at a torpedo point before a new virtual thread begins operating on the given logical processor. The torpedo mechanism clears microarchitectural state for the current virtual thread, freeing most microarchitectural resources associated with torpedoed instructions. Such mechanism does not interrupt processing of other physical thread(s) and also does not require hardware overhead associated with maintaining in the processor microarchitectural state associated with inactive threads.
US 2004210743 A1 refers to a dynamically shared group complexion table between multiple threads. An SMT system has a dynamically shared GCT. In accordance with US 2004210743 performance for the SMT is improved by configuring the GCT to allow an instruction group from each thread to complete simultaneously. The GCT has a read port for each thread corresponding to the completion table instruction/address array for simultaneous updating on completion. The forward link array also has a read port for each thread to find the next instruction group for each thread upon completion. The backward link array has a backward link write port for each thread in order to update the backward links for each thread simultaneously. The GCT has independent pointer management for each thread. Each of the threads has simultaneous commit of their renamed result registers and simultaneous updating of outstanding load and store tag usage.

### SUMMARY

The present invention aims at providing an CSE configured for a system in the simultaneous multithreading system.
The simultaneous multithreading information processing device according to the present invention is adapted for executing instructions out-of-program order in a pipeline and for completing execution of the instructions in program-order and includes: a commit stack entry (CSE) device, provided with a storage area of an entry for storing data for control up to a resources update in performing the execution completion of an instruction, for storing entries after dividing the entries into continuous areas corresponding to the number of simultaneously executed threads; and for holding data from instructions of different threads; a thread selection device for selecting one thread of instructions whose execution completion is to be determined from the entries of the CSE device; a completion target entry device for storing a copy of continuous unreleased entries, corresponding to the thread selected by the thread selection device, from among the entries of the CSE device as completion target entries with the oldest entry as a leading entry; a completion determination device and a resources update device for performing a completion determinationon the completion target entries and updating programmable resources of an execution completed instruction; and an execution wait register device, provided for each thread, for storing an execution wait factor for a completion target entry for which a completion determination cannot be completed, and holding the execution wait factor until the execution is completed, wherein the thread selection means does not select a thread in which an execution wait factor is valid as a thread of a completion target entry.

### BRIEF DESCRIPTION OF DRAWINGS

FIG. 1 is a block diagram of the entire configuration of the information processing device according to an embodiment of the present invention;
FIG. 2 is an explanatory view of the outline of an embodiment of the present invention;
FIG. 3 is a detailed block diagram of an embodiment of the present invention;;
FIG. 4 is an explanatory view of a configuration of an entry of a CSE;
FIG. 5 is an explanatory view of a pipeline from an instruction decoder to the update of resources;
FIG. 6 is an explanatory view (1) of an operation from selecting an entry of a scheduler to releasing an entry;
FIG. 7 is an explanatory view of an example of a configuration of a pointer register;
FIG. 8 is an explanatory view (2) of an operation from selecting an entry of a scheduler to releasing an entry;
FIG. 9 is a flowchart of the process performed when a signal to clear a pipeline is issued;
FIG. 10 is a flowchart of the process of a method of selecting a thread selection circuit;
FIG. 11 is a circuit chart of a thread selection circuit; FIG. 12 is an explanatory view of a method of selecting a thread when a clear signal is issued and an entry is empty;
FIG. 13 is a thread selection circuit when a clear signal is issued and a thread has an empty entry;
FIG. 14 illustrates a configuration of an execution wait register;
FIG. 15 is an explanatory view of a method of setting an execution wait register;
FIG. 16 is a circuit chart of execution wait register set and reset circuits;
FIG. 17 illustrates a thread selection circuit of an execution wait register;
FIG. 18 is a circuit chart of a thread selection circuit of an execution wait register;
FIG. 19 is a view (1) of a method of assigning an entry of a CSE;
FIG. 20 is a view (2) of a method of assigning an entry of a CSE;
FIG. 21 is a view (1) of a configuration of a thread selecting method when the number of operating threads is three or more;
FIG. 22 is a view (2) of a configuration of a thread selecting method when the number of operating threads is three or more;
FIG. 23 is a view (1) of an operation of a selected thread number management register;
FIG. 24 is a view (2) of an operation of a selected thread number management register;
FIG. 25 is a view of a thread selecting method of a thread selection circuit having three or more threads;
FIG. 26 is a view (1) of a thread selecting method having entries 0 and 1 of a selected thread number management register; and
FIG. 27 is a view (2) of a thread selecting method having entries 0 and 1 of a selected thread number management register.

### DESCRIPTION OF EMBODIMENT

With the configuration of a CSE when operating only with a single thread, instructions decoded in order are stored in an entry of the CSE according to an instruction identifier assigned during decoding. From the pointer number indicating the number of the oldest entry unreleased from the entries of the CSE and the number of entries for which the completion is determined in a completion determination, the maximum number of entries that can be completed in one cycle are copied to the completion target entries led by the oldest unreleased entry, the completion determination is performed only on the completion target entries, and programmable resources are updated only on the completed entries.

According to an embodiment of the present invention, when a plurality of threads are operated in a simultaneous multithreading system, an entry of the CSE obtains the number of operating threads from a signal indicating operating threads transmitted externally, and entries are configured by dividing the entries of the CSE into the number of operating threads, thereby enabling the plurality of threads to be simultaneously effective in the entry of the CSE. When the entries of the CSE are divided, the entries are assigned to configure continuous CSE entry numbers in one thread, and a pointer register is provided to indicate the oldest entry number in the unreleased entries in the thread of all assigned threads.

In an entry of the CSE, a plurality of threads are simultaneously valid. However, it is assumed that the control of the completion determination of an instruction of a completion target entry and the update of programmable resources can be performed only on one thread at a time in one cycle. Since the completion determination of an instruction and the update of programmable resources are controlled in different pipelines, the processes can be performed in different threads in the same period. Since the process after the completion determination controls the update of resources, the thread performing the completion determination updates the programmable resources in the next cycle.

The threads in a completion target entry can be grouped in one thread by grouping the entries selected from the entries of the CSE. To attain this, provided is a thread selection circuit for selecting in every cycle a pointer of one thread from the pointer registers in operating threads so that a thread can be selected from among the entries of the scheduler using the selected pointer of the thread, thereby selecting an entry of only one thread. Furthermore, the selected entry of the CSE selects an entry from the number of entries completed in the completion determination and the number of thread, and the selected entry is stored in the completion target entry. By selecting a thread to be stored in the completion target entry in every cycle, a thread is not stored in the completion target entry. Therefore, a completion determination can be performed on a different thread in each cycle.

The thread selection circuit obtains the information about a nonoperating thread according to a signal indicating an operating thread and transmitted externally. Thus, the thread selection circuit guarantees that a nonoperating thread is not selected by a thread to be completed, and performs the operation.

The thread selection circuit for selecting a thread of a completion target entry in every cycle does not select a thread that may cause a completion failure although it is stored in the completion target entry. Thus, such a thread is not stored in the completion target entry, thereby reducing the cycles that cannot be completed in the completion determination of a completion target entry.

When a signal for clearing a pipeline different for each thread is issued, the thread selection circuit does not select a thread that has issued the clear signal as a thread of a completion target entry. When there is a thread in a state in which no CSE entry is valid in operating threads, and when there is any valid CSE entry in other operating threads, the thread selection circuit does not select as a thread of a completion target entry a thread having no valid CSE entry. Furthermore, it has the function of monitoring the execution wait state of the oldest unreleased entry for each operating thread, and when there is an execution wait thread, the thread selection circuit does not select the execution wait thread as a thread of a completion target entry. When there is no factor of selecting a thread in the thread selection circuit, a thread of a completion target entry is selected so that a thread that has not been selected by the thread selection circuit for the longest time can be selected.

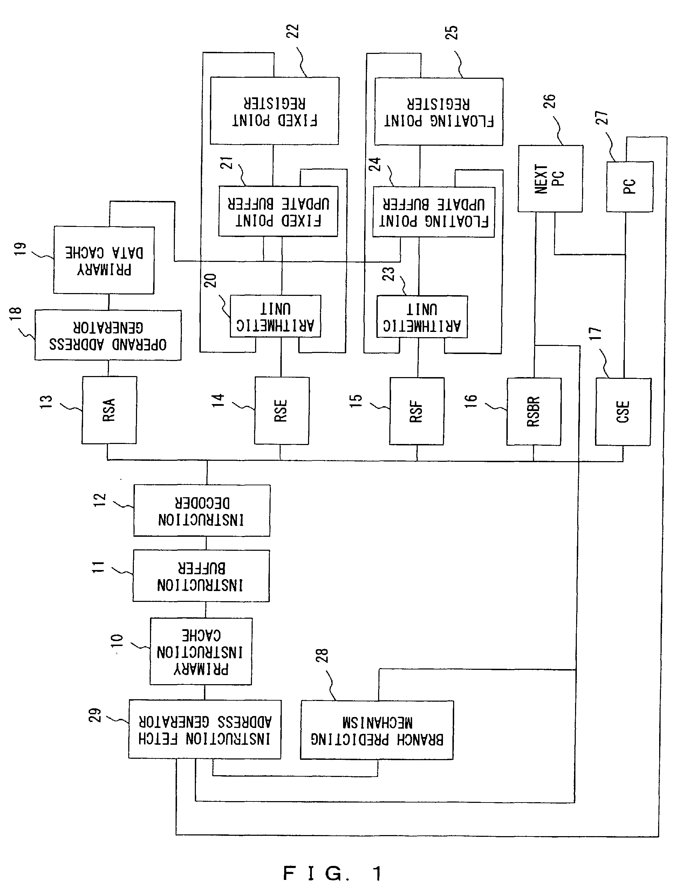

FIG. 1 is a block diagram of the entire configuration of the information processing device according to an embodiment of the present invention.
An instruction fetched from a primary instruction cache 10 is input to an instruction buffer 11. The instruction stored in the instruction buffer 11 is decoded by an instruction decoder 12. Then, according to the result of decoding the instruction by the instruction decoder 12, the instruction is transmitted to a reservation station 13 for calculation of an address, a reservation station 14 for calculation of a fixed point, a reservation station 15 for calculation of a floating point, and a reservation station 16 for a branch instruction. All decoded instructions are transmitted to a CSE 17 and an entry is generated in the CSE 17.

When an instruction is executed by the reservation station 13 for calculation of an address, the address of the operand of the instruction is calculated by an operand address generator 18. When the executed instruction is a load instruction, data is read from a primary data cache 19. The read data is stored in a fixed point update buffer 21 or a floating point update buffer 24 depending on the type of the data. When the instruction is completed, the data is written from the fixed point update buffer 21 to a fixed point register 22, and from the floating point update buffer 24 to a floating point register 25.

When the instruction is executed by the reservation station 14 for calculation of a fixed point, the data to be calculated is provided for an arithmetic unit 20, and a calculation result is written to the fixed point update buffer 21. When the instruction is completed, the data from the fixed point update buffer 21 is written to the fixed point register 22.

When the instruction is executed by the reservation station 15 for calculation of a floating point, the data to be calculated is provided for an arithmetic unit 23, and a calculation result is written to the floating point update buffer 24. When the instruction is completed, the data from the floating point update buffer 24 is written to the floating point register 25.

When the instruction is executed by the reservation station 16 for a branch instruction, the information about a branch target of the instruction is output, and the instruction branch target information is provided for a next program counter 26, an instruction fetch address generator 29, and a branch predicting mechanism 28.

When the instruction completing process is terminated in the CSE 17, the information about the instruction is provided for the next program counter 26 and a program counter 27, and the contents of each counter is updated. In addition, the programmable resources of the fixed point register 22, a floating point register, etc. are also updated.

The value of the program counter 27 is provided for the instruction fetch address generator 29. The instruction fetch address generator 29 provides the primary instruction cache 10 with the address of the instruction to be fetched.

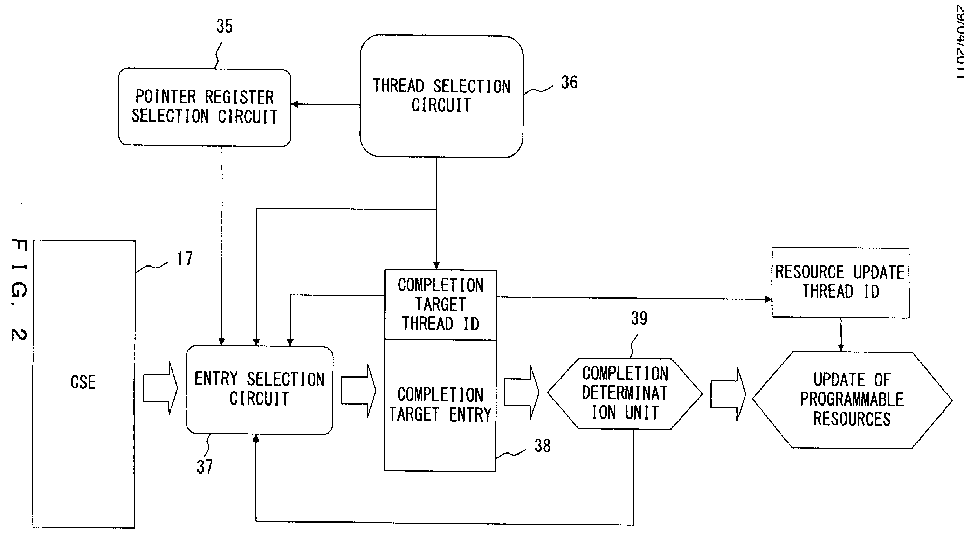

FIG. 2 is an explanatory view of the outline of an embodiment of the present invention.
An entry selection circuit 37 selects an entry in which the completion of an instruction to be determined. When an entry is selected, signals from the thread selection circuit 36 and a point register selection circuit 35, a completion target thread ID indicating the thread to be completed, and a signal from a completion determination unit 39 are used. The thread selection circuit 36 selects a thread of an instruction whose completion is to be determined, and a selection result is provided for the point register selection circuit 35, the entry selection circuit 37, and a completion target entry 38. The completion target entry 38 stores a copy of the entry of the CSE 17 selected by the entry selection circuit 37. Not only a completion target entry but also a completion target thread ID is stored in the completion target entry 38. The completion of the instruction stored in the completion target entry 38 is determined by the completion determination unit 39. The programmable resources of the thread of the instruction for which the completion is determined by the completion determination unit 39 are updated. The designation of programmable resources is performed by the update thread ID obtained from the completion target thread ID. The completion determination termination information from the completion determination unit 39 is input to the entry selection circuit 37 and used as a trigger of the selection of another entry. FIG. 1 is further explained below. An instruction fetch request is issued to the instruction address selected by the instruction fetch address generator 29, and the instruction fetched from the primary instruction cache 10 is stored in the instruction buffer 11. An instruction is provided for the instruction decoder 12 from the instruction buffer 11 in the program order, and the instruction decoder 12 decodes the instruction in the program order. The instruction decoder 12 generates necessary entries for the reservation station 13 for generating of a main storage operand address (RSA (reservation station for address generate)) for controlling the execution of the instruction, the reservation station 14 for calculation of a fixed point (RSE (reservation station for execute)), the reservation station 15 for calculation of a floating point (RSF (reservation station for floating)), and the reservation station 16 for a branch instruction (RSBR (reservation station for branch)). In addition, an entry is generated in the commit stack entry (CSE) 17 for controlling the completion of an instruction on all decoded instructions.

When the decoded instruction generates entries in the RSA 13, the RSE 14, and the RSF 15, corresponding registry names are stored in the fixed point update buffer 21 (GUB (general update buffer)) and the floating point update buffer 24 (FUB (floating update buffer)), thereby executing instructions in the out-of-order execution, and storing the execution result in the GUB 21 and the FUB 24. The instruction executed out of order by the reservation station is completed in the program order by the control of the CSE 17, and the programmable resources such as the fixed point register 22, the floating point register 25, a program counter (PC 27, NEXT_PC 26), etc. are updated only on the completed instruction.

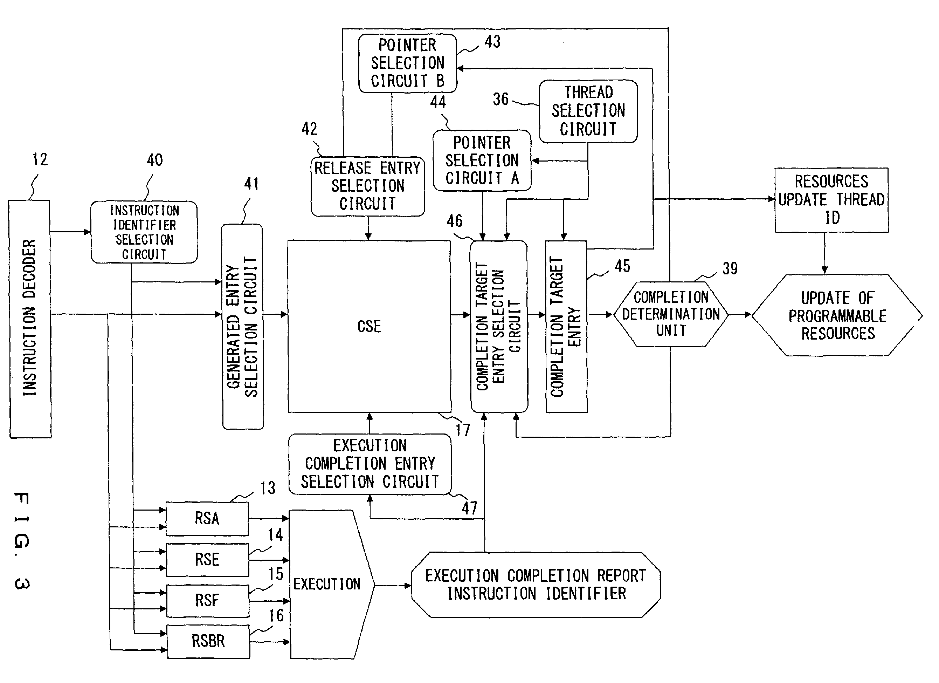

FIG. 3 is a detailed block diagram of the present embodiment.
The instruction decoded by the instruction decoder 12 is executed by the reservation station 13 for calculation of an address, the reservation station 14 for calculation of a fixed point, the reservation station 15 for calculation of a floating point, and the reservation station 16 for a branch instruction. By the execution of the instruction, an execution completion report is generated with the identifier of the execution completed instruction, and provided for an execution completion entry selection circuit 47 and a completion target entry selection circuit 46. In addition, an instruction identifier is provided from the instruction decoder 12 to an instruction identifier selection circuit 40, and the instruction identifier selected by the instruction identifier selection circuit 40 is provided for a generated entry selection circuit 41, the reservation station 13 for calculation of an address, the reservation station 14 for calculation of a fixed point, the reservation station 15 for calculation of a floating point, and the reservation station 16 for a branch instruction.

The generated entry selection circuit 41 selects an entry for generating an entry in the CSE 17 to wait for the completion of the execution of the instruction decoded by the instruction decoder 12. The execution completion entry selection circuit 47 selects an entry of the CSE 17 that has been execution completed from the instruction identifier of the execution completion report. Upon determination of the completion determination unit 39 that the execution of the instruction has been completed, a release entry selection circuit 42 selects an entry to be released from the CSE 17. The completion target entry selection circuit 46 selects an entry of the CSE 17 storing a target instruction of a completion determination from the signals of the thread selection circuit 36 and a pointer selection circuit A44. A copy of the entry read by the completion target entry selection circuit 46 is stored in a completion target entry 45, and the completion is determined by the completion determination unit 39. A completion determination result is input to the completion target entry selection circuit 46 and the release entry selection circuit 42. The information about the completion target entry 45 is input to a pointer selection circuit B43, and a pointer selection result by the pointer selection circuit B43 is used in selecting an entry of the release entry selection circuit 42. The completion target thread ID corresponding to the entry stored in the completion target entry 45 is a resources update thread ID, and is used in designating the programmable resources of the thread corresponding to the instruction whose completion is determined by the completion determination unit 39. For the instruction whose completion is determined by the completion determination unit 39, the corresponding programmable resources are updated.

Described below is the case in which two threads (threads 0 and 1) are operating, and the total number of the entries of the CSE is N (N is an odd number in the present embodiment). The number of threads can be two or more, and the number of entries of the CSE is practically equal to or exceeds the number of threads.

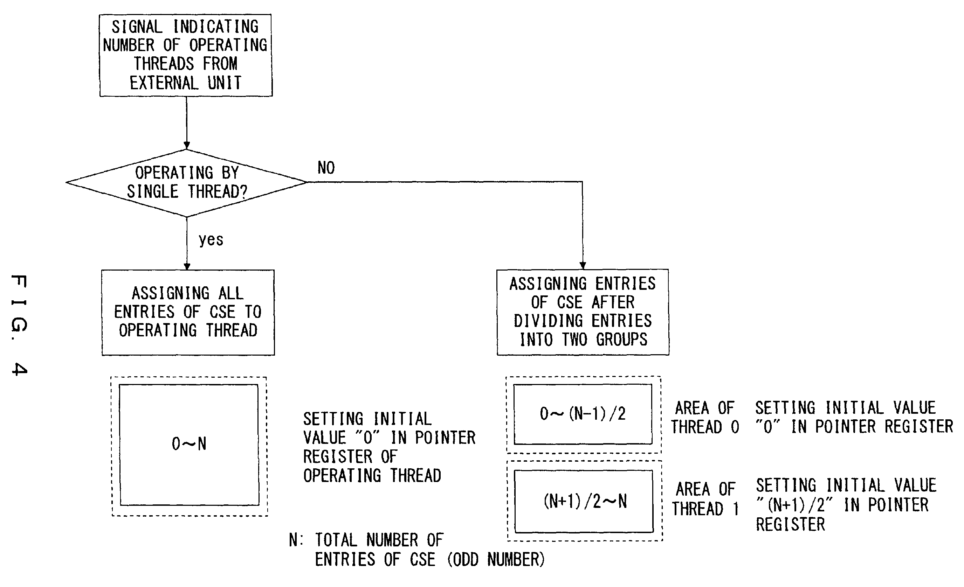

FIG. 4 is an explanatory view of a configuration of an entry of a CSE.
The entries of the CSE are configured by dividing the entries of the CSE into the number of operating threads by determining according to the signal indicating the operating thread transmitted externally whether or not a single thread is operating, and obtaining the information about the number of operating threads. In this case, when the entries of the CSE are divided into the number of operating threads, the entries are assigned with continuous entry numbers for one thread, and the number indicating an initial value is stored in a pointer register pointing to the number of the oldest entry in the unreleased entries of all assigned threads.

When two threads (threads 0 and 1) are operating, the entries of the CSE are divided and configured as illustrated at the lower right in FIG. 4. The entry area of the CSE of the thread 0 is assigned to 0 through (N-1)/2, the entry area of the CSE of the thread 1 is assigned to (N+1)/2 through N. The thread 0 stores 0 as the initial value of the pointer register, and the thread 1 stores (N+1)/2. The value of the pointer register is controlled so that only the numbers in the assigned area. That is, the next pointer register to the thread 0 indicating (N-1)/2 stores 0, and the next pointer register to the thread 1 indicating N stores (N+1)/2. When a single thread is operating, all entries of the CSE are assigned to the operating thread. When the single thread is operating, both 0 and 1 store 0 as the initial value of the pointer register.

When the number of threads is changed in the normal operation, a clear signal is issued from all operating threads to clear the pipelines of all threads and the resources used as work registers such as the CSE etc. , and the number of threads is changed. When the number of threads is changed, the entry of the CSE changes the configuration according to the signal externally transmitted and operating the thread.

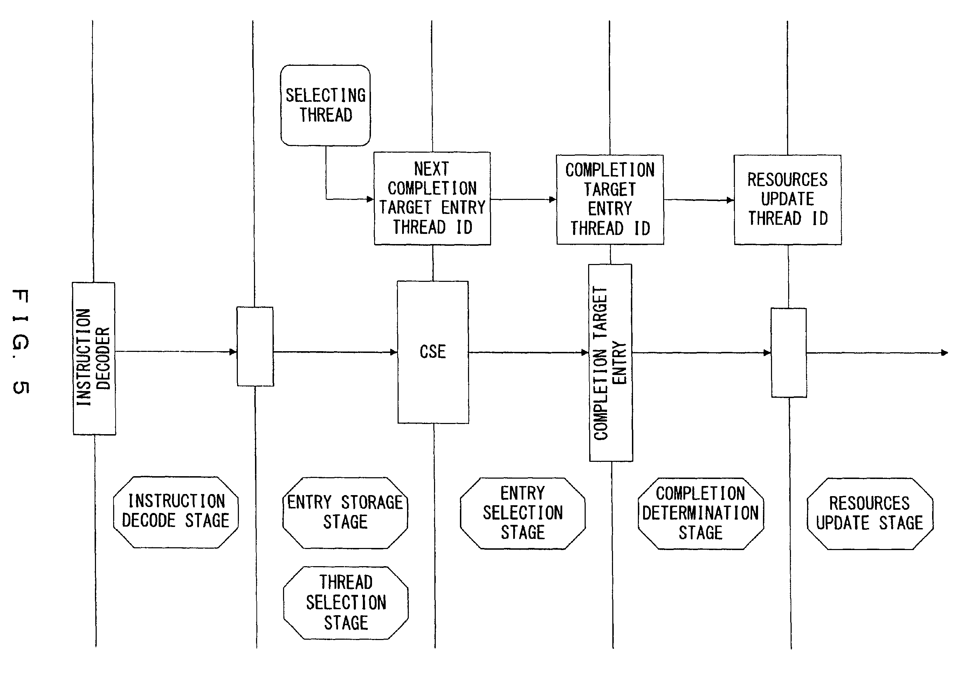

FIG. 5 is an explanatory view of a pipeline from an instruction decoder to the update of resources.
A stage in which an instruction is decoded is referred to as an instruction decode stage, a stage in which an entry of a CSE is stored in the next cycle is referred to as an entry storage stage, a stage in which a copy of an entry of a CSE selected by a completion target entry by selecting the entry from the entries of the CSE is stored is referred to as an entry selection stage, a stage in which a completion determination is performed on a completion target entry is referred to as a completion determination stage, and a stage in which programmable resources are updated is referred to as a resources update stage. Since a thread to be stored in a completion target entry is selected one cycle before the entry selection stage, the stage one cycle before the entry selection stage is referred to as a thread selection stage. The thread ID selected in the thread selection stage refers to the entry selection stage in the next cycle, the completion determination stage in the next cycle, and the thread ID in the resources update stage in the next cycle. When resources are updated after completing the instruction in the shortest period from the instruction decoding, the entry storage stage and the thread selection stage are included in the same cycle.

The instruction decoder decodes only one thread at a time in one cycle. The instruction decoder assigns an instruction identifier indicating the number of the entry of the CSE to an instruction to be decoded. An instruction identifier is provided for each operating thread by acquiring the information about the number of operating threads from a signal indicating the operating thread and transmitted externally. The area of the instruction identifier for each thread corresponds to the division of the entry of the CSE, and the area of the instruction identifier assigned for each thread and the area of the pointer register belong to the same area. The decoded instruction stores data for control up to the resources update in performing the execution completion of the decoded instruction in the entry of the CSE of the number indicated by the value of the instruction identifier. In the stored entry, the valid signal indicating that the entry is valid is placed in the ON position.

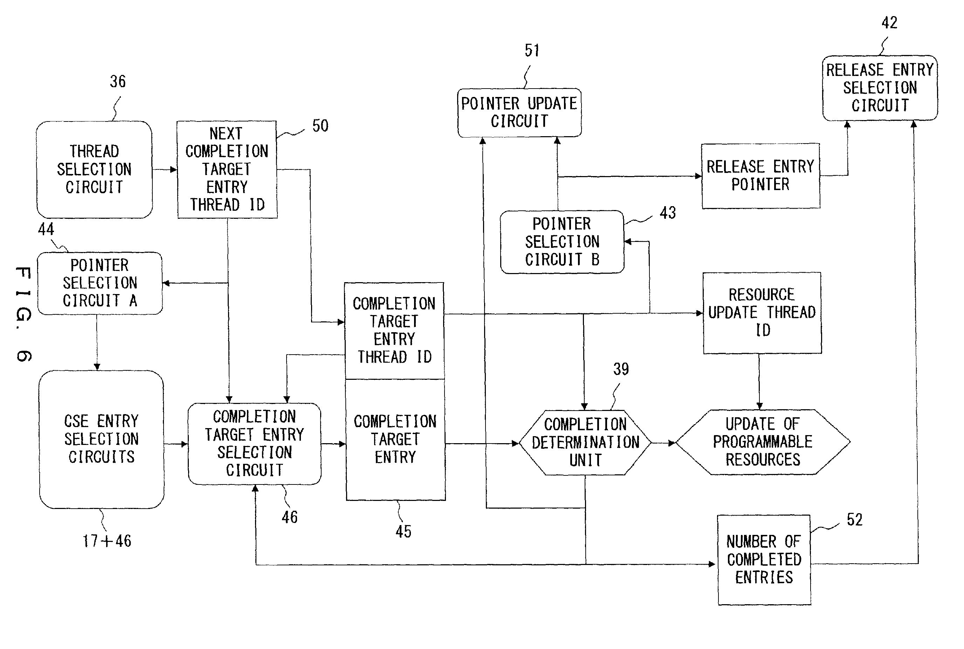

FIGS. 6 through 8 are explanatory view of the operations from selecting an entry of the CSE to releasing the entry.
In FIG. 6, the component also illustrated in FIG. 3 is assigned the same reference numeral.

There is only one thread for which a completion determination is determined at a time in one cycle. By storing in the completion target entry 45 a copy of an entry selected from the entries of the CSE in one thread only, the maximum number of entries that can be simultaneously completed in one cycle can be completed.

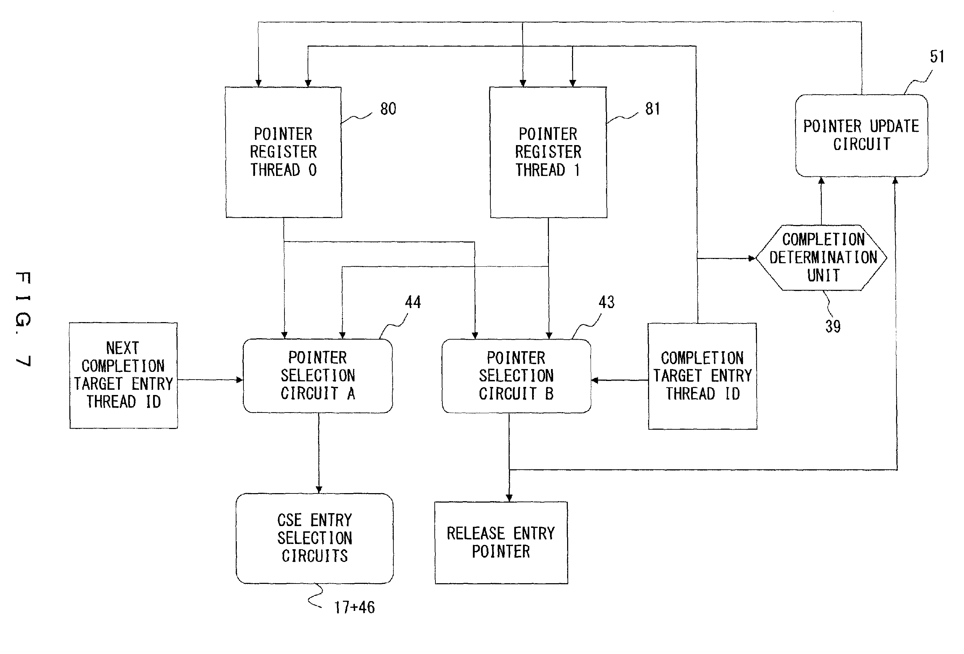

To store in the completion target entry 45 the maximum number of entries that can be simultaneously completed in one cycle, the necessary pointer register (FIG. 7) when a selection is made from the entries of the CSE is selected for one thread, thereby selecting entries in only one thread from among the entries of the CSE. Since the entries of the CSE are configured by the areas having continuous numbers and assigned to one thread, continuous entries can be selected using the pointer register of the thread.

By providing the thread selection circuit 36 for selecting one thread from the entries of the CSE, a pointer register can be selected by the pointer selection circuit A44 from a NEXT completion target entry thread ID 50 selected by the thread selection circuit 36. The pointer selected by the pointer selection circuit A44 can select continuous entries with the entry specified by the pointer selecting the number of entries obtained by adding by the entry selection circuits 17+46 of the CSE the maximum number of entries of the completion target entry 45 to the maximum number of entries that can be simultaneously completed in one cycle.

FIG. 7 is an example of a configuration of a pointer register.
FIG. 7 explicitly illustrates the pointer register. The pointer values provided for the pointer selection circuits A44 and B43 are those stored in a pointer register thread 0 (80) and a pointer register thread 1 (81). The pointer register thread 0 (80) and the pointer register thread 1 (81) store the pointer values from a pointer update circuit 51. The pointer register thread 0 (80) stores a pointer value corresponding to the thread 0, and the pointer register thread 1 (81) stores a pointer value corresponding to the thread 1. The pointer selection circuit A44 and the pointer selection circuit B43 selects one of the pointer values of the threads 0 and 1. The pointer selection circuit B43 selects the pointer of the release entry by acquiring a completion target entry thread ID. The completion target entry thread ID is provided for the pointer register thread 0 (80) and the pointer register thread 1 (81), and a new pointer value is read by the pointer update circuit 51. The completion target entry thread ID is provided for the completion determination unit 39 and a completion determination of an instruction of the thread of the ID is performed. When the completion determination is terminated, the pointer of the instruction whose completion determination has been terminated is provided for the pointer update circuit 51. The pointer update circuit 51 is provided with a release entry pointer from the pointer selection circuit B43, and it is used in calculating the next release entry pointer. The pointer selection circuit A44 selects a pointer for acquiring an entry for an instruction completion determination. The process is to acquire a NEXT completion target entry thread ID (next, a thread ID of an entry as an instruction completion target) and select a thread.

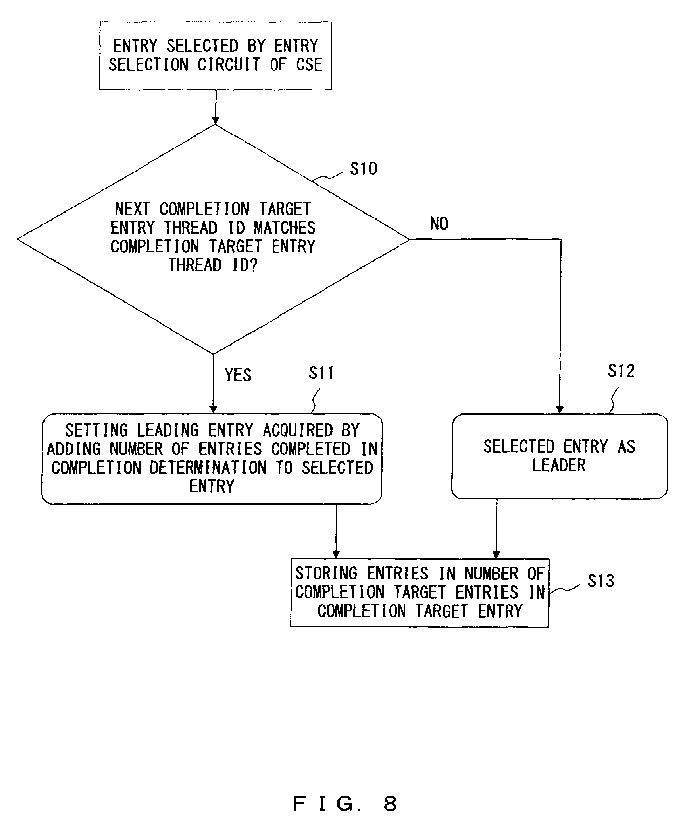

FIG. 8 is a flowchart of the operation of the completion target entry selection circuit. When the thread ID of the completion target entry 45 matches the NEXT completion target entry thread ID 50 (step S10), the completion target entry selection circuit 46 selects the maximum number of entries of the completion target entry 45 with the number of entries completed in the cycle and the leading entry obtained by adding from the head of the entries (step S11) selected by the entry selection circuits 17+46 of the CSE (step S13). When the thread ID of the completion target entry 45 does not match the NEXT completion target entry thread ID 50 (step S10), the maximum number of entries of the completion target entry 45 are selected from the head of the entries selected by the entry selection circuits 17+46 of the CSE (step S12). After the process in S11 or S12, the completion target entry selection circuit 46 stores a copy of the selected entry in the completion target entry 45 (step S13).

The entry for which the completion is determined after the completion determination is performed by the completion target entry 45 is selected by the pointer selection circuit B43 using the thread ID of the completion target entry 45. Then, the pointer update circuit 51 adds the number of completed entries to the pointer register, and updates the pointer register.

The thread ID of the completion target entry 45 is a thread ID of resources update in the next cycle, and the completed entry updates the programmable resources of the thread having the resources update thread ID.

In the same cycle as the update of the programmable resources, the completed CSE entry is released. When the number of entries whose completion is determined in the completion determination cycle is the number of completed entries, the number of completed entries is specified in the resources update cycle with respect to the pointer selected by the pointer selection circuit B43 as the completion target entry thread ID. With respect to the entry of the CSE selected by the release entry selection circuit 42 by the release entry pointer, the entry becomes invalid by resetting the valid signal. In this case, the value before the update of the pointer register is reserved as a release entry pointer.

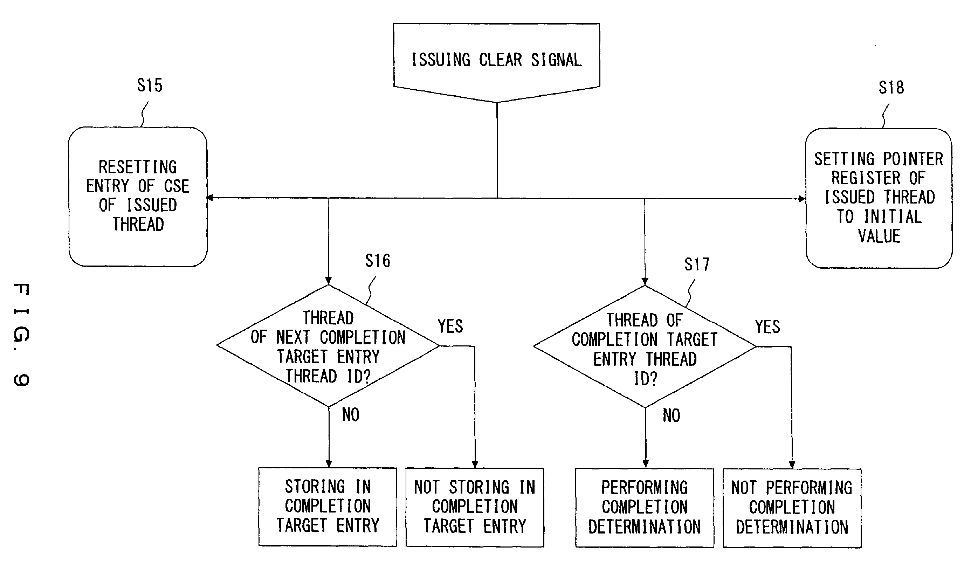

FIG. 9 is a flowchart of the process when a signal to clear a pipeline is issued.
When a pipeline mechanism issues a signal to clear a pipeline divided into threads, the entry of the CSE of the thread that has issued the clear signal is reset (step S15), thereby placing all entries of the CSE of the thread that has issued the signal to clear the pipeline in the invalid state. When the thread ID of the thread that has issued the signal to clear the pipeline is the thread ID of the NEXT completion target entry (step S16), VALID is not stored in the completion target entry, thereby not performing the completion determination of the thread that has issued the signal to clear the pipeline. On the other hand, when the thread has not issued the signal to clear the pipeline, the thread is stored in the completion target entry to perform the completion determination in the next cycle.

If the thread that has issued the clear signal is a thread of the completion target entry (YES in step S17), no completion determination is performed on the thread. If the thread has not issued the clear signal (NO in step S17), the completion determination is performed on the thread. Then, the pointer register of the thread that has issued the signal to clear the pipeline is set to the initial value, and updated (step S18).

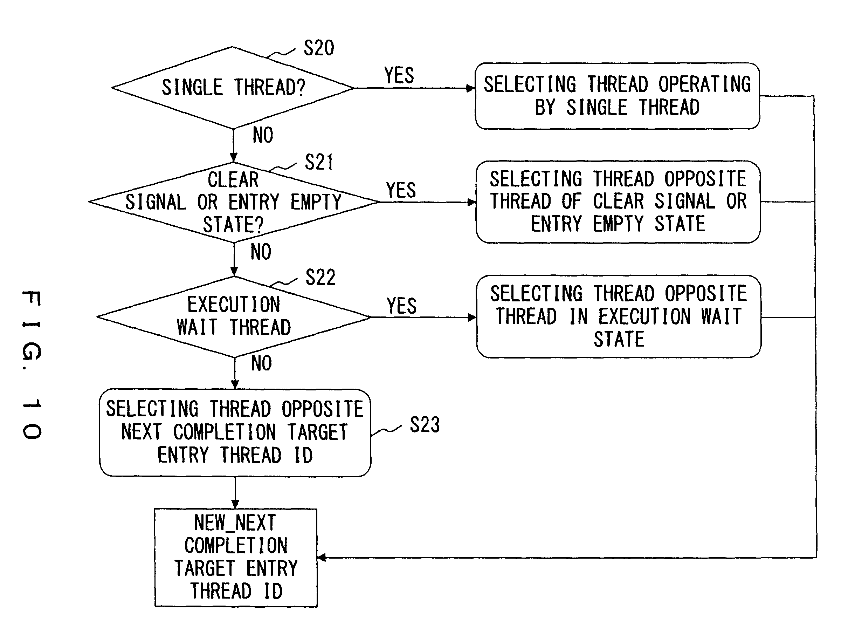

FIG. 10 is a flowchart of the process of the selecting process of the thread selection circuit.
The process of selecting the thread selection circuit is roughly configured by three stages. If any of the selection stages is performed, a NEW_NEXT completion target entry thread ID as the NEXT completion target entry thread ID of the next cycle is determined. If any of the three selection stages is not performed, the thread ID of the thread opposite the thread indicated by the NEXT completion target entry thread ID is defined as a NEW_NEXT completion target entry thread ID.

The thread selection circuit determines first in step S20 whether the process is being performed in the single thread system or the multithread system. If the determination in step S20 is YES, a thread operating by a single thread is selected and the NEW_NEXT completion target entry thread ID is determined.

If the determination in step S20 is NO, it is determined in step S21 whether or not a clear signal has been issued or the entry of the CSE is empty in the current thread. If the determination in step S21 is YES, a clear signal or a thread different (opposite when there are two threads) from the thread in the entry empty state is selected, and a NEW_NEXT completion target entry thread ID is determined. If the determination in step S21 is NO, it is determined in step S22 whether or not the current thread is in the execution wait state.

If the determination in step S22 is YES, a thread different (opposite when there are two threads) from the thread in the execution wait state is selected, and a NEW_NEXT completion target entry thread ID is determined. If the determination in step S22 is NO, a thread different (opposite when there are two threads) from the NEXT completion target entry thread ID is selected, and a NEW_NEXT completion target entry thread ID is determined.

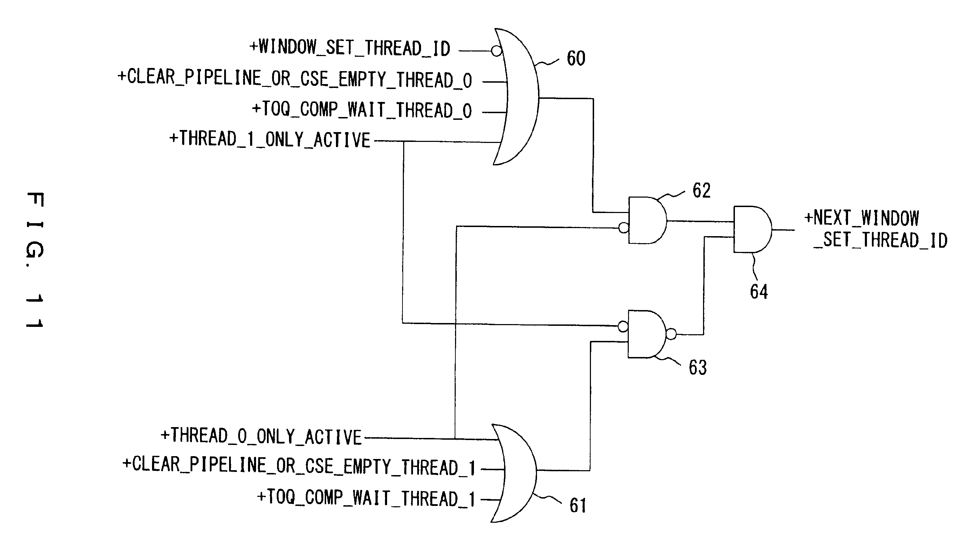

FIG. 11 is a circuit chart of a thread selection circuit.
The selection having the highest priority is to have the NEW_NEXT completion target entry thread ID as the thread ID operating in a single thread system when the operating thread is operated in the single thread system.

+THREAD_0_ONLY_ACTIVE and +THREAD_1_ONLY_ACTIVE are signals indicating that they are operating in the single thread system. The circuit illustrated in FIG. 11 selects a thread placed in the ON position when +THREAD_0_ONLY_ACTIVE or +THREAD_1_ONLY_ACTIVE is placed in the ON position. The two signals +THREAD_0_ONLY_ACTIVE and the +THREAD_1_ONLY_ACTIVE cannot be simultaneously placed in the ON position.

+WINDOW_SET_THREAD_ID is a signal for determination of two threads by 0 and 1. The logic of the signal is inverted and input to an OR circuit 60 so that the thread opposite the current thread can be selected. +CLEAR_PIPELINE_OR_CSE_EMPTY_THREAD_0 is a signal placed in the ON position when a signal to clear the pipeline of the thread 0 is issued or when the entry of the CSE is empty. +TOQ_COMP_WAIT_THREAD_0 is a signal placed in the ON position when the oldest entry in the unreleased entries of the CSE of the thread 0 is in the execution wait state. These signals are input to the OR circuit 60. When the signals are placed in the ON positions, they are triggers of the signal for selecting the thread 1.

+CLEAR_PIPELINE_OR_CSE_EMPTY_THREAD_1 is a signal placed in the ON position when the signal to clear the pipeline of the thread 1 is issued, or when the entry of the CSE is empty. +TOQ_COMP_WAIT_THREAD_1 is a signal placed in the ON position when the oldest instruction in the unreleased entries of the CSE of the thread 1. These signals are input to an OR circuit 61. When the signals are placed in the ON positions, they are triggers of the signal for selecting the thread 0.

The output of the OR circuits 60 and 61 are input to AND circuits 62 and 63, and the output of the AND circuit 63 is inverted and input to an AND circuit 64. The output of 0 or 1 of the AND circuit 64 is +NEXT_WINDOW_SET_THREAD_ID as the thread number (0 or 1) of the thread to be next processed.

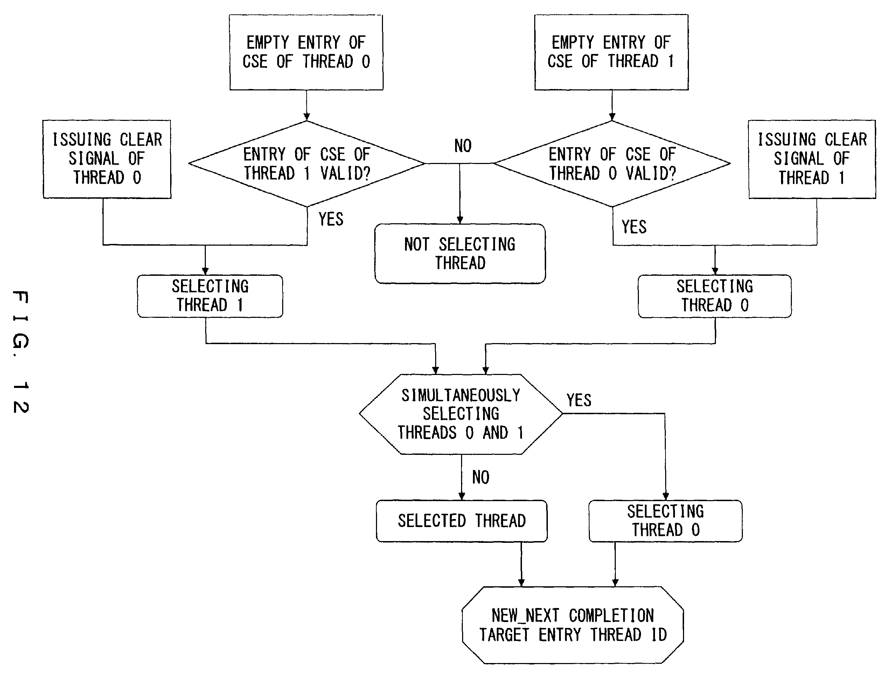

FIG. 12 is an explanatory view of the method of selecting a thread when a clear signal is issue and the entry is empty.
When the instruction processing operation is not in the single thread system, that is, when two threads are operating, the case in which the two following events occur is selected on a priority basis as the selection at the second stage.

The first event is to issue a signal to clear the pipeline divided into threads (the clear signals of the threads 0 and 1 are issued). In this case, NEW_NEXT completion target entry thread ID is selected for the thread opposite the thread that has issued the clear signal (If the thread 0 has issued a clear signal, the thread 1 is selected. If the thread 1 has issued a clear signal, the thread 0 is selected). When the clear signals of the two threads are simultaneously issued, the NEW_NEXT completion target entry thread ID selects the thread 0.

The second event is to have no valid entry of the CSE of one thread in the two operating threads. In this case, if there is any valid entry in the entries of the CSE of the other thread, then the NEW_NEXT completion target entry thread ID is selected for the thread opposite the thread having no valid entry of the CSE. When there are no valid entries of the CSE in the two threads, the circuit cannot select a thread. When different threads simultaneously occur in the first and second events, the NEW_NEXT completion target entry thread ID selects the thread 0.

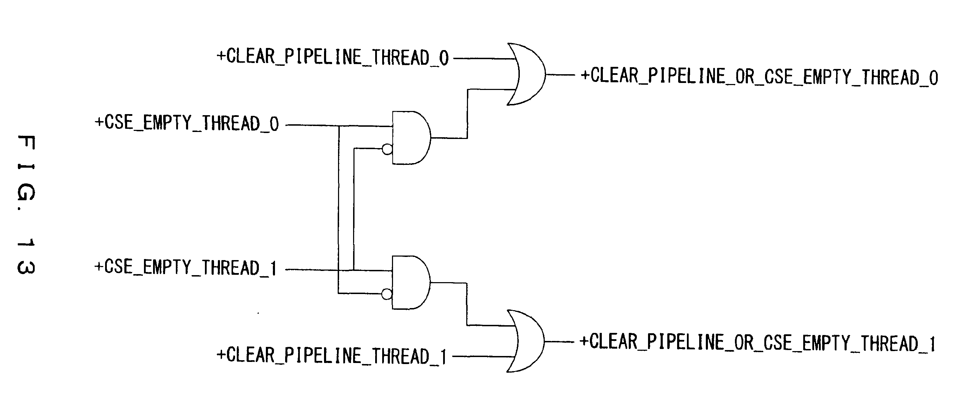

FIG. 13 illustrates a selection circuit of a thread when a clear signal is issued and an entry is empty.
+CLEAR_PIPELINE_THREAD_0 and 1 indicate the clear signal, and +CSE_EMPTY_THREAD_0 and 1 indicate the state in which no entries of the CSE are valid. When no entries are valid, +CLEAR_PIPELINE_OR_CSE_EMPTY_THREAD_0 or _1 is placed in the ON position when the signal indicating no valid entry of the opposite thread is placed in the OFF position. The output of the clear signal and the OR signal indicating no valid entries are connected to the circuit illustrated in FIG. 11, and selects a thread. The output in FIG. 13 is a signal indicating the case in which a pipeline clear signal is issued or the entries of the CSE are invalid.

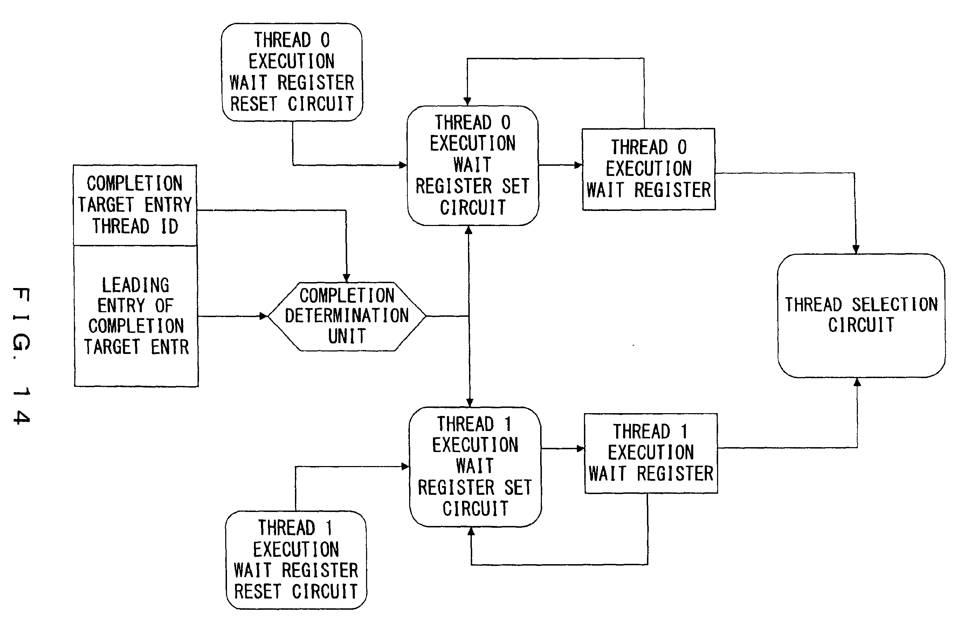

FIG. 14 illustrates the configuration of the execution wait register.
The selection at the third stage (third stage in FIG. 10) is the NEXT completion target entry thread depending on whether or not the next event has occurred. The thread selection circuit has the function of monitoring the execution wait state of the oldest unreleased entry. When there is an execution wait thread, the thread selection circuit selects the NEW_NEXT completion target entry thread ID for the thread opposite the execution wait thread.

An execution wait register set circuit is provided for each of the threads 0 and 1. The execution wait register set circuits of the threads 0 and 1 receive a reset signal from the respective execution wait register reset circuits, and resets the execution wait register. The execution wait registers of the threads 0 and 1 have the information about the execution wait instruction set by the execution wait register set circuit of each thread according to the signal from the completion determination unit. The execution wait register has the information about the execution wait instruction set in the register when an instruction execution is awaited, and when the instruction execution wait state is released, the information is reset. The thread selection circuit reads the contents of the execution wait register of each thread, and selects a thread.

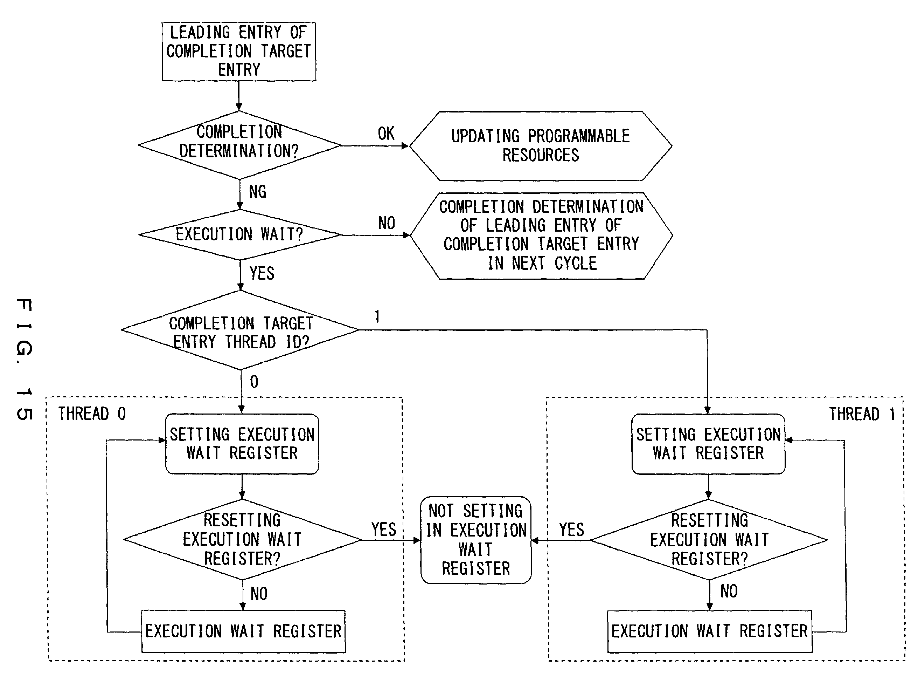

FIG. 15 is an explanatory view of the method of setting the execution wait register.
When a completion determination is performed on the completion target entry, and when the leading entry of the completion target entry is valid and can be completed in the completion determination, programmable resources are updated. When the entry cannot be completed in the completion determination, but is not in the execution wait state, the next cycle is entered and a completion determination is performed on the leading entry of new completion target entries. When the factor of being incapable of completing in the completion determination is an execution wait state of an instruction, the information about the current execution wait is stored in the execution wait register from the execution wait register set circuit. The execution wait register is provided for each thread. Once the information about an execution wait instruction is stored in the execution wait register, the execution wait register continues holding the information about the execution wait instruction until the reset signal is issued from the execution wait register reset circuit.

The execution wait register reset circuit issues a reset signal when three events occur.
The first event refers to the case in which an execution wait factor stored in the execution wait register has been completed. In this case, a reset signal is output, and the execution wait register can be reset. When the execution of an instruction is completed, an execution completion report and an instruction identifier are transmitted to the CSE, and the execution completion report is stored in the entry of the CSE according to the number of the entry indicated by the instruction identifier. In this case, when the number of the pointer register for each thread matches the instruction identifier transmitted when the execution is completed, the execution completed instruction indicates the oldest unreleased entry. Therefore, a reset signal is issued from the execution wait register reset circuit not to store it in the execution wait register. The second event refers to the case in which a signal to clear the pipeline is issued. Also in this case, the execution wait register reset circuit of a thread that has issued the clear signal issues a reset signal. The third event refers to the case in which the execution wait register reset circuits of all threads simultaneously issue a reset signal in a predetermined cycle.

When the execution wait register set circuit issues a set signal when the execution wait register reset circuit issues a reset signal, the reset signal resets the execution wait register on a priority basis.

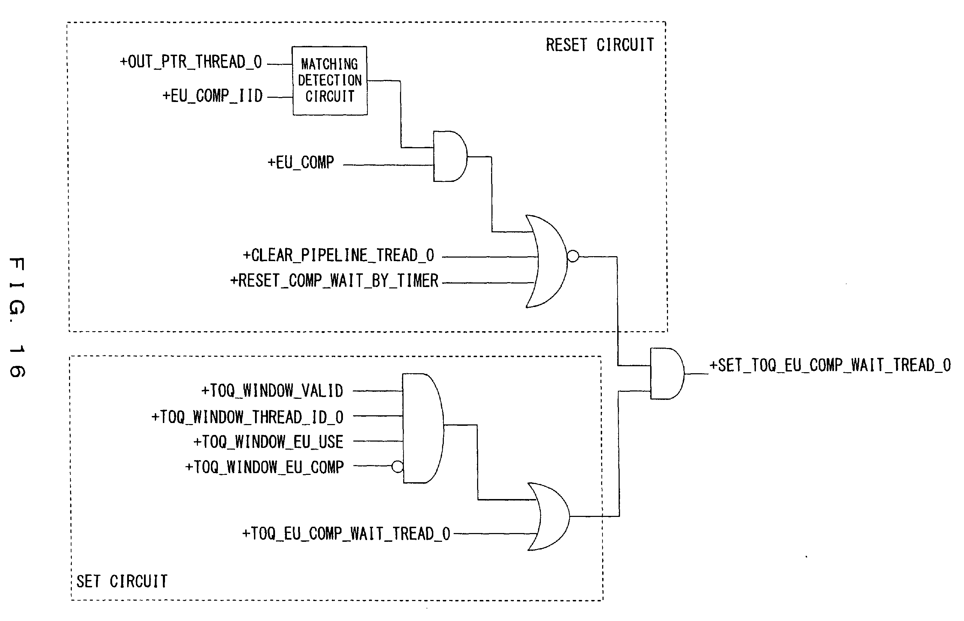

FIG. 16 is a circuit chart of the execution wait register set and reset circuits.
The circuit chart in FIG. 16 illustrates the circuit of the thread 0 in the operation execution wait state. The circuit is divided into the lower set circuit and the upper reset circuit. The set circuit outputs a signal indicating that the leading entry of the completion target entry is in the operation execution wait state when all of the signal +TOQ-WINDOW_VALID indicating that the leading entry of the completion target entries are valid, the signal +TOQ_WINDOW_THREAD_ID_0 indicating that the thread ID of the completion target entry refers to the thread 0, and the signal +TOQ_WINDOW_EU_USE indicating that the leading entry of the completion target entry is an arithmetic instruction are placed in the ON positions, and the signal +TOQ_WINDON_EU_COMP indicating that the arithmetic operation of the leading entry of the completion target entry is completed is placed in the OFF position. The signal +TOQ_EU_COMP_WAIT_THREAD_0 indicating that the information about the execution wait instruction is set in the execution wait register is ORed with the signal indicating that the completion target entry is in the execution wait state to reset the execution wait register, and the ORed signal is used as a set signal.

The reset circuit has three types of factors that place output in the ON positions. The first factor refers to the case in which the signal +OUT_PTR_THREAD_0 indicating the pointer register matches the signal -EU_COMP_IID indicating the instruction identifier of the entry that has completed the execution of an instruction, and the signal +EU_COMP indicating the instruction completion report about the completion of the execution of an instruction is placed in the ON position. The second factor refers to the case in which the signal +CLEAR_PIPELINE_THREAD_0 indicating the clear signal is placed in the ON position. The third factor refers to the case in which the signal +RESET_COMP_WAIT_BY_TIMER indicating that reset signals are simultaneously issued from the execution wait register reset circuits of all threads is placed in the ON position in a predetermined cycle. When any of the three conditions is satisfied, and in the operation wait of the instruction of the execution wait register, the signal +SET_TOQ_EU_COMP_WAIT_THREAD_0 is generated not to set the operation wait thread of the instruction as the instruction completion determination target thread. A similar circuit is provided in the thread 1, and also similar circuits are provided for a branch instruction wait state and a load/store instruction wait state.

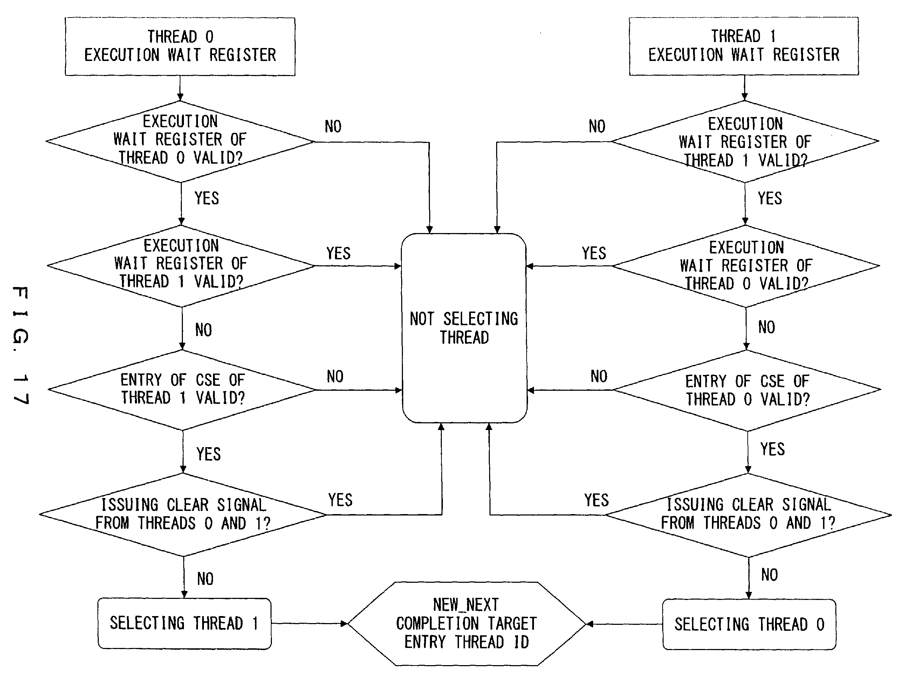

FIG. 17 illustrates the thread selecting method using a execution wait register.
When the execution wait register is valid, the execution wait register of the opposite thread is not valid or any of the entries of the CSE of the opposite thread is valid, and when a signal to clear a pipeline is not issued regardless of the threads, the NEW_NEXT completion target entry thread ID is selected for the thread opposite the thread in which the execution wait register is in the valid state. When the execution wait registers of both threads are in the valid state, no thread can be selected in this circuit.

That is, when the execution wait register of one thread is described for example, it is determined whether or not the execution wait register of the thread 0 is valid. If it is not valid, no thread is selected. If it is valid, it is determined whether or not the execution wait register of the thread 1 is valid. If it is valid, no thread is selected. If it is not valid, it is determined whether or not the entry of the CSE of the thread 1 is valid. When it is not valid, no thread is selected. If it is valid, it is determined whether or not a clear signal is issued from the threads 0 and 1. If it is issued, no thread is selected. If it is not issued, the thread 1 is selected, and the thread ID of a new NEXT completion target entry thread ID is issued. The same holds true with the execution wait register of the thread 1.

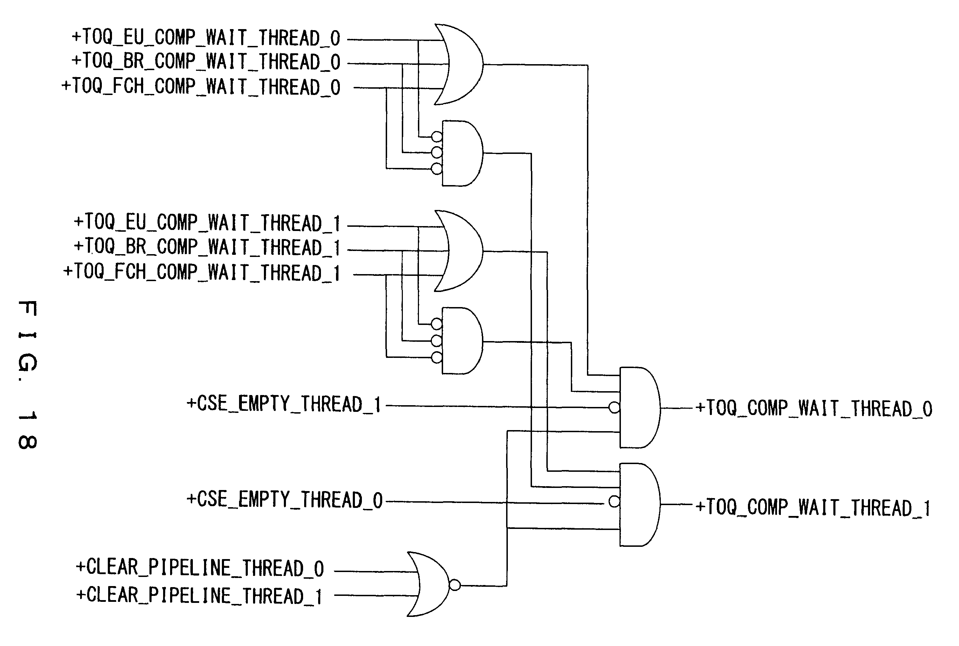

FIG. 18 is a circuit chart of the thread selection circuit of the execution wait register.
For one thread of the signals +TOQ_EU_COMP_WAIT_THREAD_0 and 1 (for each of the threads 0 and 1) indicating the operation execution wait as a signal of the execution wait register, +TOQ_BR_COMP_WAIT_THREAD_0 and 1 (for each of the threads 0 and 1) indicating the execution wait of a branch instruction, and +TOQ_FCH_COMP_WAIT_THREAD_0 and 1 (for each of the threads 0 and 1) indicating the execution wait of a load/store instruction, any of them is placed in the ON state, the signal (the +TOQ_EU_COMP_WAIT_THREAD_0 and 1, +TOQ_BR_COMP_WAIT_THREAD_0 and 1, and +TOQ_FCH_COMP_WAIT_THREAD_0 and 1 above) of the execution wait register of the opposite thread (the thread 1 opposite the thread 0, and the thread 0 opposite the thread 1) is not placed in the ON position, the signals +CSE_EMPTY_THREAD_0 and 1 indicating that the entries of the CSE of the opposite thread is in the empty state are placed in the OFF position, and the signals +CLEAR_PIPELINE_THREAD_0 and 1 indicating the clear signals are placed in the OFF position. The held signals +TOQ_COMP_WAIT_THREAD_0 and 1 are the signals indicating whether or not the instruction execution wait is entered, and connected to the circuit in FIG. 11, thereby selecting a thread.

With reference to FIGS. 10 and 11, when any of the events for selection of the NEXT completion target entry thread ID is not hit, the NEW_NEXT completion target entry thread ID indicating the thread opposite the thread indicated by the NEXT completion target entry thread ID is selected. In the circuit in FIG. 11, by adding the signal having the opposite polarity of the step +WINDOW_SET_THREAD_ID indicating the NEXT completion target entry thread ID to the OR signal (input of the OR circuit 60) of the thread 0, the NEW_NEXT completion target entry thread ID is selected for the opposite thread of the NEXT completion target entry thread ID when no conditions are satisfied.

Described next is the configuration of the entries of the CSE when the number of operating threads is three or more.

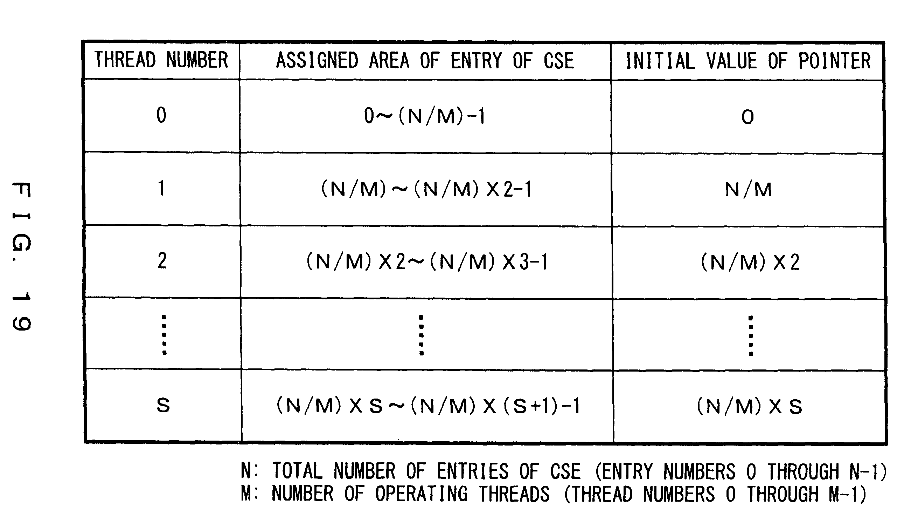

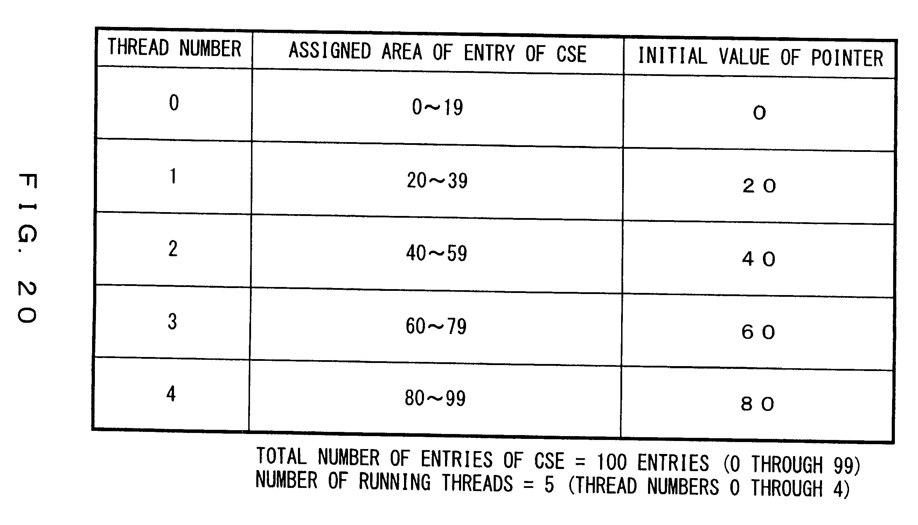

FIGS. 19 and 20 illustrate the method of assigning entries of the CSE.

Assume that the total number of entries of the CSE is N, and the number of operating threads is M. If the thread numbers are 0 through S (M-1), the area of a CSE entry corresponding to each thread number can be assigned by the equation in the table in FIG. 19. The initial value of the pointer register provided for each thread number is indicated at the rightmost of the table. For example, FIG. 19 illustrates the configuration of the CSE in which the total number of entries of the CSE is 100, and the number of operating threads is 5. In this method, with any number of operating threads, entries can be assigned corresponding to the number of threads, and any number of threads can be processed.

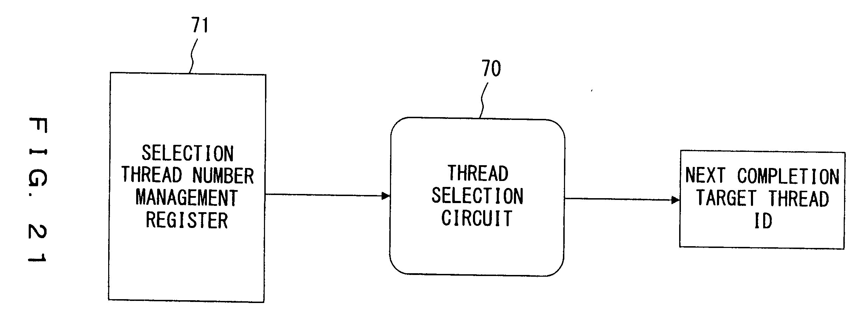

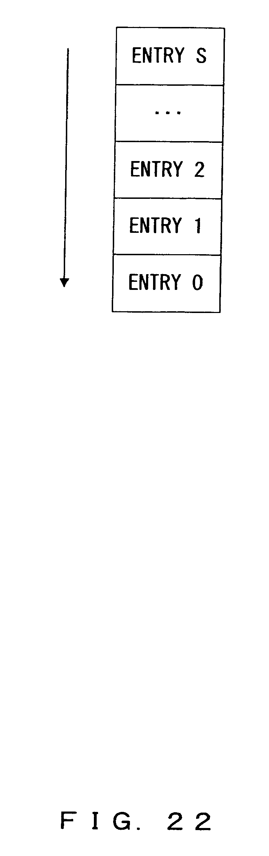

FIGS. 21 and 22 are configurations of the thread selecting method when the number of operating threads is three or more.
A selection thread number management register 71 manages the order of the threads selected by a thread selection circuit 70. FIG. 21 is the configuration of the register. The number of entries of each thread of the CSE is determined by the number of operating threads, and the entries of each thread store the respective thread numbers. The thread number stored in the entry 0 of the selection thread number management register 71 refers to the thread not selected for the longest time by the thread selection circuit, and the thread number referring to the thread not selected for the second longest time is stored in the entry 1. Thus, the smaller entry number refers to the thread number referring to the thread not selected for the longer time by the thread selection circuit. The entry of the selection thread number management register 71 having the largest entry number stores the thread number selected latest by the thread selection circuit.

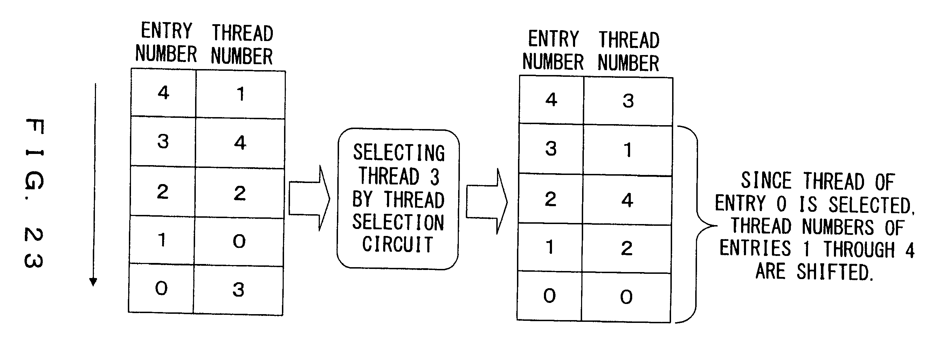

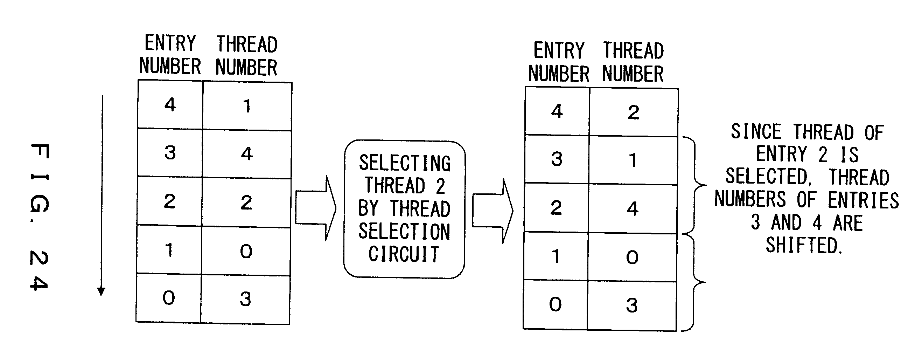

FIGS. 23 and 24 illustrate the operations of the selected thread number management register.
For example, the case in which the number of operating threads is five is described below.
In this case, the selected thread number management register is configured by the entries 0 through 4. At a time point, the entry 0 of the selected thread number management register stores the thread 3, the entry 1 stores the thread 0, the entry 2 stores the thread 2, the entry 3 stores the thread 4, and the entry 4 stores the thread 5. In FIG. 23, the thread selection circuit selects the thread 3. In this case, the selected thread number management register is stored in the entry 4 storing the thread selected latest, and the thread number stored in the entry 1 through 4 is shifted to one smaller entry number and stored. That is, the selected thread number management register in the cycle after the thread 3 is selected by the thread selection circuit stores the thread 0 in the entry 0, the thread 2 in the entry 1, the thread 4 in the entry 2, the thread 1 in the entry 3, and the thread 0 in the entry 4. In FIG. 24, when the thread selection circuit selects the thread 2, the selected thread number management register has the selected thread 2 stored in the entry 4. Since the selected thread 2 is stored in the entry 2, the thread numbers stored with the entries 0 and 1 are not shifted in this cycle. The thread numbers stored in the entries 3 and 4 are stored in the entry numbers smaller by 1.

That is, the selected thread number management register in the cycle after the thread 2 is selected in the thread selection circuit stores the thread 3 in the entry 0, the thread 0 in the entry 1, the thread 4 in the entry 2, the thread 1 in the entry 3, and the thread 2 in the entry 4.

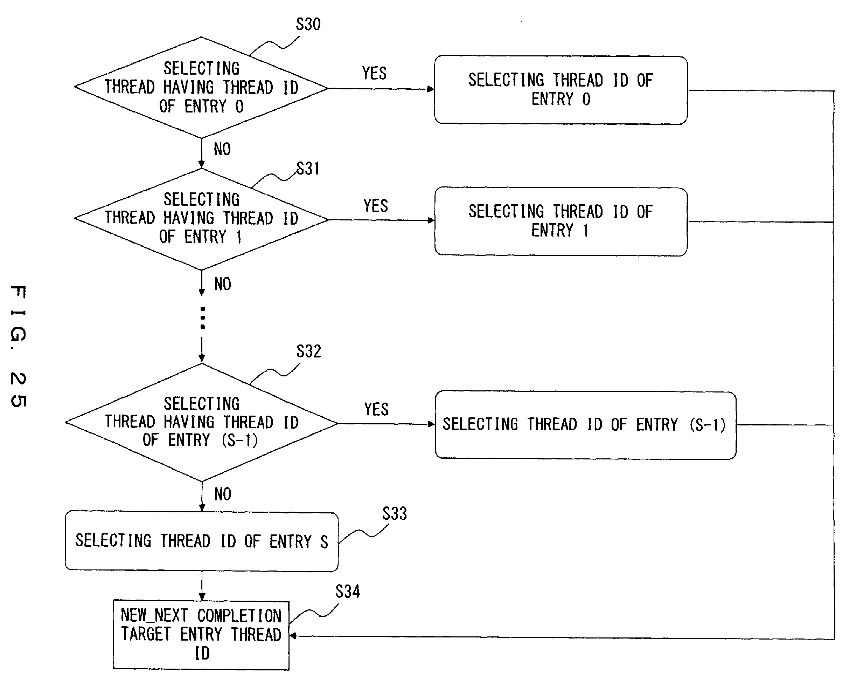

FIG. 25 illustrates the thread selecting method in the thread selection circuit having three or more threads.
The thread selecting method enables the thread number that has not been selected by the thread selection circuit for the longest time to be selected on the priority basis. The entry 0 of the selected thread number management register stores the thread number that has not been selected by the thread selection circuit for the longest time. A thread is selected by checking in order the thread number of the entry 0 of the selected thread number management register.

In step S30, it is determined whether or not the thread having the thread ID of the entry 0 has been selected. If the determination in step S30 is YES, the thread ID of the entry 0 is selected, and control is passed to step S34. If the determination in step S30 is NO, it is determined in step S31 whether or not the thread having the thread ID of the entry 1 is selected. If the determination in step S31 is YES, the thread ID of the entry 1 is selected, and control is passed to step S34. In and after step S31, it is determined for each entry whether or not the entry has been selected, and in step S32, the thread having the thread ID of the entry (S-1) is selected. If the determination in step S32 is YES, the thread ID of the entry (S-1) is selected, and control is passed to step S34. If the determination in step S32 is NO, the thread ID of the entry S is selected in step S33, and in step S34, the ID of the selected thread is a NEW_NEXT completion target entry thread ID.

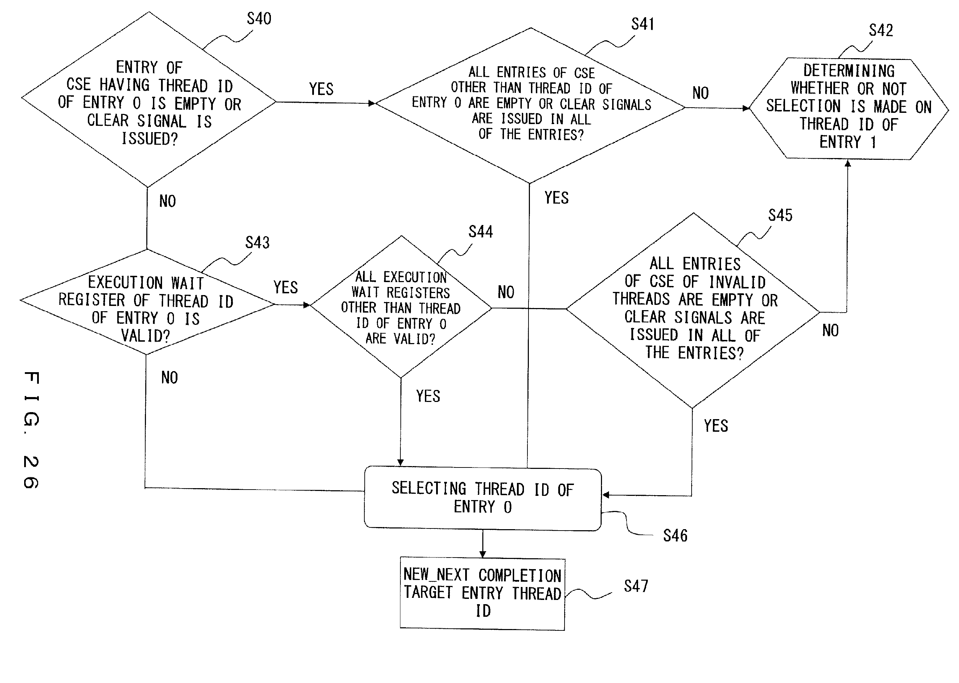

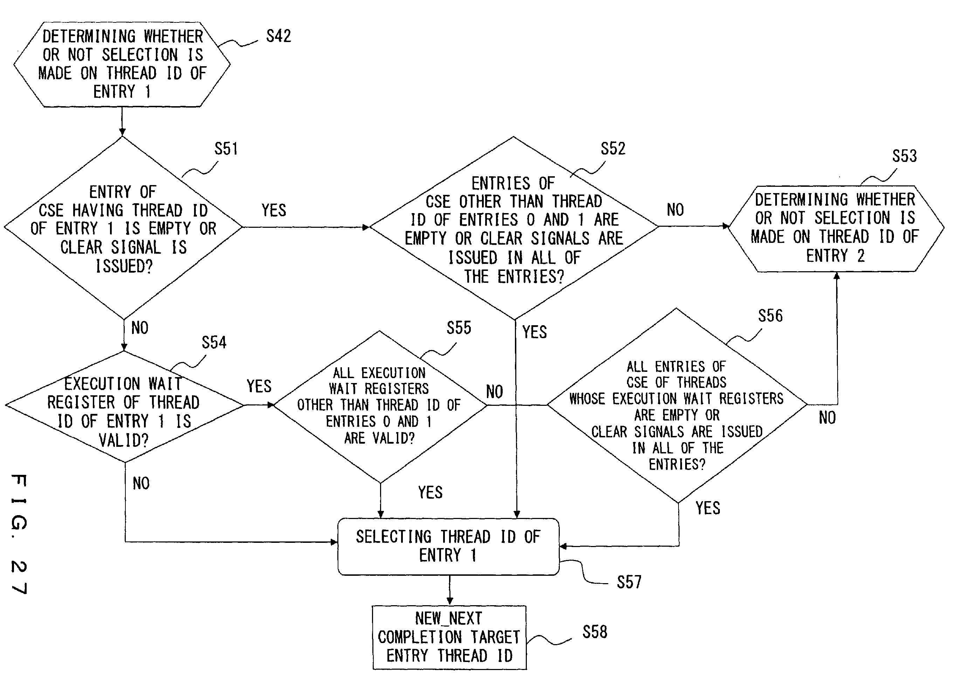

FIGS. 26 and 27 illustrates the thread selecting method of the entries 0 and 1 of the selected thread number management register.
If the entry of the CSE having the thread number of the entry 0 is not empty, a clear signal of the thread number of the entry 0 has not been issued, and the execution wait register of the thread number of the entry 0 is not valid, then the thread number of the entry 0 is a NEW_NEXT completion target entry thread ID. If the entry of the CSE of the thread number of the entry 0 is empty, or the clear signal of the thread number of the entry 0 has been issued, then the thread number of the entry 0 is a NEW_NEXT completion target entry thread ID when the entries of the CSE of the thread number other than the entry 0 are all empty or when the clear signals of the thread number other than the entry 0 are issued. If the entries of the CSE of the thread number of the entry 0 are empty or if the clear signal of the thread number of the entry 0 has been issued, then the state of the thread number of the entry 1 is checked when the entries of the CSE of the thread number other than the entry 0 are valid or when the clear signal of the thread number other than the entry 0 has not been issued.

When the execution wait register having the thread number of the entry 0 is valid, and when all execution wait registers of the threads other than the thread number of the entry 0 are valid, the thread number of the entry 0 is a NEW_NEXT completion target entry thread ID. When the execution wait register having the thread number of the entry 0 is valid and when there is a thread having an invalid execution wait register of the thread other than the thread number of the entry 0 is not valid, the thread number of the entry 0 is a NEW_NEXT completion target entry thread ID when the entries of the CSE of the thread having an invalid execution wait register are all empty or when a clear signal has been issued. Otherwise, the state of the thread number of the entry 1 is checked.

In FIG. 26, in step S40, it is determined whether or not the entry of the CSE having the thread ID of the entry 0 is empty or a clear signal has been issued. If the determination in step S40 is NO, it is determined in step S43 whether or not the execution wait register having the thread ID of the entry 0 is valid. If the determination in step S43 is NO, control is passed to step S46. If the determination in step S43 is YES, it is determined in step S44 whether or not all execution wait registers other than the thread ID of the entry 0 are all valid. If the determination in step S44 is YES, control is passed to step S46. If the determination in step S44 is NO, control is passed to step S45. It is determined in step S45 whether or not the entries of the CSE of invalid threads are all empty or whether or not clear signals have been issued in all of them. If the determination in step S45 is YES, control is passed to step S46. If the determination in step S45 is NO, control is passed to step S42, and it is determined whether or not a selection is made on the thread ID of the entry 1 as a target. If the determination in step S40 is YES, it is determined in step S41 whether or not the entries of the CSE other than the thread ID of the entry 0 are empty or whether or not clear signals have been issued in all of them. If the determination in step S41 is YES, control is passed to step S46. If the determination in step S41 is NO, control is passed to step S42. In step S46, the thread ID of the entry 0 is selected, and the selected thread ID is output as a NEW_NEXT completion target entry thread ID in step S47. FIG. 27 illustrates the process in and after step S42 in FIG. 26. In step S51, it is determined whether or not the entry of the CSE having the thread ID of the entry 1 is empty or a clear signal has been issued. If the determination in step S51 is NO, it is determined in step S54 whether or not the execution wait register having the thread ID of the entry 1 is valid. If the determination in step S54 is NO, control is passed to step S57. If the determination in step S54 is YES, it is determined in step S55 whether or not all execution wait registers other than the thread IDs of the entries 0 and 1 are valid. If the determination in step 55 is YES, control is passed to step S57. If the determination in step S55 is NO, control is passed to step S56. In step S56, it is determined whether or not all entries of the CSE of invalid threads are empty or clear signals have been issued in all of them. If the determination in step S56 is YES, control is passed to step S57. If the determination in step S56 is NO, control is passed to step S53, and it is determined whether or not the thread ID of the entry 2 is to be selected. If the determination in step S51 is YES, it is determined in step S52 whether or not the entries of the CSE other than the thread IDs of the entries 0 and 1 are empty or clear signals have been issued in all of them. If the determination in step S52 is YES, control is passed to step S57. If the determination in step S52 is NO, control is passed to step S53. In step S57, the thread ID of the entry 1 is selected, and the selected thread ID is output as a NEW_NEXT completion target entry thread ID in step S58.

When there are a larger number of threads, a similar process is added to the operation in step S53.

## Claims

1. A simultaneous multithreading information processing device for executing instructions out-of-program order in a pipeline and for completing execution of the instructions in-program-order, comprising:
a commit stack entry (CSE) means (17), provided with a storage area of an entry for storing data for control up to an resources update in performing the execution completion of an instruction, for storing entries after dividing the entries into continuous areascorresponding to the number of simultaneously executedthreads; and for holding data from instructions of different threads;
**characterized by**
a thread selection means (36) for selecting one thread of instructions whose execution completion is to be determined from the entries of the CSE means (17);
a completion target entry means (38) for storing a copy of continuous unreleased entries, corresponding to the thread selected by the thread selection means (36), from among the entries of the CSE means (17) as completion target entries with the oldest entry as a leading entry;
a completion determination means (39) for performing a completion determination on the completion target entries and updating programmable resources ofan execution completed instruction; and
an execution wait register means, provided for each thread, for storing an execution wait factor for a completion target entry for which a completion determination cannot be completed, and holding the execution wait factor until the execution is completed, wherein the thread selection means (36) does not select a thread in which an execution wait factor is valid as a thread of a completion target entry.

2. The device according to claim 1, wherein
the CSE means (17) comprises for each of simultaneously operated threads a pointer register indicating a number of an oldest entry in a thread.

3. The device according to claim 1, wherein
a number of entries stored as completion target is a maximum number that can be simultaneously completion determined in one cycle.

4. The device according to claim 1, wherein
the CSE means(17) storesall entries after assigning all entries to an operating thread when one thread is operating.

5. The device according to claim 1, further comprising:
a reset means for resetting an entry of the CSE means(17) of a thread corresponding to a pipeline in which a clear signal is issued when the clear signal is issued in the pipeline;
an entry nullification means for nullifying an entry of the completion target entry means (38) when a thread in which a clear signal is issued matches a thread of an entry stored in the completion target entry means(38);
a completion determining process nullification means for nullifying a completion determining process when an entry of the completion target entry means (38) is nullified; and
an initialization means for allowing, for a thread in which a clear signal is issued, the thread selection means (36) to select a leading position of a storage area of the CSE means (17) assigned for each thread.

6. The device according to claim 5, further comprising
a means for nullifying storage of a copy of an entry of a CSE in an entry of the completion target entry means when a thread in which a clear signal is issued matches a thread which is to store the copy of the entry of the CSE in the completion target entry means.

7. The device according to claim 1, wherein
the thread selection means(36) does not select a nonoperating thread.

8. The device according to claim 1, wherein
the thread selection means(36) does not select a thread corresponding to a pipeline in which a clear signal is issued.

9. The device according to claim 1, wherein
the thread selection means (36) does not select a thread in which corresponding entries are all nullified.

10. The device according to claim 1, further comprising:
a first clear means for clearing the register means of a thread in which a clear signal is issued to a corresponding pipellne; and
a second clear means for clearing all register means in a predetermined cycle.

11. The device according to claim 1, wherein
the thread selection means (36) selects a thread that has not been selected for a longest time.

## Patentansprüche

1. Simlultan-Multithread-Informationsverarbeitungsvorrichtung zum Ausführen von Befehlen außerhalb einer Programmreihenfolge in einer Pipeline und zum Abschließen der Ausführung der Befehle in Programmreihenfolge, enthaltend:
Commit-Stapeleintrags- (CSE-) einrichtungen (17), die mit einem Speicherbereich eines Eintrags versehen sind, um Daten zur Steuerung bis zu einer Ressourcen-Aktualisierung beim Ausführen des Ausführungsabschlusses eines Befehls zu speichern, um Einträge nach dem Teilen der Einträge in kontinuierliche Bereiche entsprechend der Anzahl von gleichzeitig ausgeführten Threads zu speichern, und um Daten von Befehlen von verschiedenen Threads zu halten;
**gekennzeichnet durch**
Thread-Auswahleinrichtungen (36) zum Auswählen eines Threads von Befehlen, deren Ausführungsabschluss von den Einträgen der CSE-Einrichtungen (17) zu bestimmen ist;
Abschlusszieleintragseinrichtungen (38) zum Speichern einer Kopie von kontinuierlich nicht freigegebenen Einträgen entsprechend dem Thread, der von den Thread-Auswahleinrichtungen (36) ausgewählt wurde, aus den Einträgen der CSE-Enrichtungen (17) als Abschlusszieleinträge mit dem ältesten Eintrag als einem führenden Eintrag;
Abschlussbestimmungseinrichtungen (39) zum Ausführen einer Abschlussbestimmung an den Abschlusszieleinträgen und Aktualisieren programmierbarer Ressourcen eines Befehls mit abgeschlossener Ausführung; und
Ausführungswarteregistereinrichtungen, die für jeden Thread vorgesehen sind, um einen Ausführungswartefaktor für einen Abschlusszieleintrag zu speichern, für den eine Abschlussbestimmung nicht abgeschlossen werden kann, und den Ausführungswartefaktor zu halten bis die Ausführung abgeschlossen ist, wobei die Thread-Auswahleinrichtungen (36) einen Thread, in dem ein Ausführungswartefaktor gültig ist, nicht als einen Thread eines Abschlusszieleintrags auswählen.

2. Vorrichtung nach Anspruch 1, wobei
die CSE-Einrichtungen (17) für jeden von gleichzeitig betriebenen Threads ein Zeigerregister enthalten, das eine Nummer eines ältesten Eintrags im Thread angibt.

3. Vorrichtung nach Anspruch 1, wobei
eine Anzahl von Einträgen, die als Abschlussziel gespeichert sind, eine maximale Anzahl ist, die gleichzeitig in einem Zyklus hinsichtlich des Abschlusses bestimmt werden kann.

4. Vorrichtung nach Anspruch 1, wobei
die CSE-Einrichtungen (17) alle Einträge nach dem Zuweisen aller Einträge zu einem arbeitenden Thread speichert, wenn ein Thread arbeitet.

5. Vorrichtung nach Anspruch 1, ferner enthaltend:
Rücksetzeinrichtungen zum Zurücksetzen eines Eintrags der CSE-Einrichtungen (17) eines Threads entsprechend einer Pipeline, in dem ein Klärungssignal ausgegeben wird, wenn das Klärungssignal in der Pipeline ausgegeben wird;
Eintragsannullierungseinrichtungen zum Annullieren eines Eintrags der Abschlusszieleintragseinrichtungen (38), wenn ein Thread, in dem ein Klärungssignal ausgegeben wird, mit einem Thread eines Eintrags übereinstimmt, der in den Abschlusszieleintragseinrichtungen (38) gespeichert ist;
Abschlussbestimmungsprozess-Annullierungseinrichtungen zum Annullieren eines Abschlussbestimmungsprozesses, wenn ein Eintrag der Abschlusszieleintragseinrichtungen (38) annulliert wird; und
Initialisierungseinrichtungen, um es für einen Thread, in dem ein Klärungssignal ausgegeben wird, den Thread-Auswahleinrichtungen (36) zu gestatten, eine führende Position eines Speicherbereichs der CSE-Einrichtungen (17) auszuwählen, der für jeden Thread zugewiesen ist.

6. Vorrichtung nach Anspruch 5, ferner enthaltend:
Einrichtungen zum Annullieren der Speicherung einer Kopie eines Eintrags eines CSEs in einem Eintrag der Abschlusszieleintragseinrichtungen, wenn ein Thread, in dem ein Klärungssignal ausgegeben wird, mit einem Thread übereinstimmt, der die Kopie des Eintrags des CSEs in den Abschlusszieleintragseinrichtungen speichern soll.

7. Vorrichtung nach Anspruch 1, wobei
die Threadauswahleinrichtungen (36) nicht einen Thread auswählen, der nicht arbeitet.

8. Vorrichtung nach Anspruch 1, wobei
die Threadauswahleinrichtungen (36) nicht Thread entsprechend einer Pipeline auswählen, in der ein Klärungssignal ausgegeben wird.

9. Vorrichtung nach Anspruch 1, wobei
die Threadauswahleinrichtungen (36) nicht einen Thread auswählen, in dem entsprechende Einträge annulliert sind.

10. Vorrichtung nach Anspruch 1, ferner enthaltend:
erste Klärungseinrichtungen zum Klären der Registereinrichtungen eines Threads, in dem ein Klärungssignal an eine entsprechende Pipeline ausgegeben wird; und
zweite Klärungseinrichtungen zum Klären aller Registereinrichtungen in einem vorgegebenen Zyklus.

11. Vorrichtung nach Anspruch 1, wobei
die Thread-Auswahleinrichtungen (36) einen Thread auswählen, der über eine längste Zeit hinweg nicht ausgewählt wurde.

## Revendications

1. Dispositif de traitement d'informations par multiples fils d'exécution simultané pour exécuter des instructions dans un ordre différent de l'ordre du programme, dans un pipeline et pour achever l'exécution des instructions dans l'ordre du programme, comprenant :
des moyens formant entrée de pile à engagement (CSE) (17) pourvus d'une zone de mémorisation d'une entrée pour mémoriser des données pour commander jusqu'à une mise à jour de ressources à la fin d'exécution d'une instruction, pour mémoriser des entrées après la division des entrées en des zones continues correspondant au nombre de fils d'exécution exécutés simultanément ; et pour maintenir des données provenant d'instructions de différents fils d'exécution
**caractérisé par**
des moyens de sélection de fil d'exécution (36) pour sélectionner un fil d'exécution d'instructions dont l'achèvement d'exécution doit être déterminé à partir des entrées des moyens CSE (17) ;
des moyens d'entrée de cible d'achèvement (38) pour mémoriser une copie d'entrées non libérées continues, correspondant au fil d'exécution sélectionné par les moyens de sélection de fil d'exécution (36), parmi les entrées des moyens de CSE (17) en tant qu'entrées de cibles d'achèvement avec l'entrée la plus ancienne en tant qu'entrée de tête ;
des moyens de détermination d'achèvement (39) pour effectuer une détermination d'achèvement sur les entrées de cibles d'achèvement et mettre à jour des ressources programmables d'une instruction dont l'exécution est achevée ; et
des moyens formant registre d'attente d'exécution, prévus pour chaque fil d'exécution, pour mémoriser un facteur d'attente d'exécution pour une entrée de cible d'achèvement pour laquelle une détermination d'achèvement ne peut pas être effectuée, et pour maintenir le facteur d'attente d'exécution jusqu'à ce que l'exécution soit achevée, dans lequel les moyens de sélection de fil d'exécution (36) ne sélectionnent pas un fil d'exécution dans lequel un facteur d'attente d'exécution est valide en tant que fil d'exécution d'une entrée de cible d'achèvement.

2. Dispositif selon la revendication 1, dans lequel
les moyens CSE (17) comprennent, pour chacun des fils d'exécution exécutés simultanément, un registre de pointeur indiquant un numéro d'une entrée la plus ancienne dans un fil d'exécution.

3. Dispositif selon la revendication 1, dans lequel
un nombre d'entrées mémorisées en tant que cible d'achèvement est un nombre maximum dont l'achèvement peut être déterminé simultanément pendant un cycle.

4. Dispositif selon la revendication 1, dans lequel
les moyens CSE (17) mémorisent toutes les entrées après avoir attribué toutes les entrées à un fil d'exécution opérationnel lorsqu'un fil d'exécution est opérationnel.

5. Dispositif selon la revendication 1, comprenant en outre :
des moyens de réinitialisation pour réinitialiser une entrée des moyens CSE (17) d'un fil d'exécution correspondant à un pipeline dans lequel un signal de mise à zéro est émis lorsque le signal de mise à zéro est émis dans le pipeline ;
des moyens d'annulation d'entrée pour annuler une entrée des moyens d'entrée de cible d'achèvement (38) lorsqu'un fil d'exécution dans lequel un signal de mise à zéro est émis correspond à un fil d'exécution d'une entrée mémorisée dans les moyens d'entrée de cible d'achèvement (38) ;
des moyens d'annulation de processus de détermination d'achèvement pour annuler un processus de détermination d'achèvement lorsqu'une entrée des moyens d'entrée de cible d'achèvement (38) est annulée ; et
des moyens d'initialisation pour permettre, pour un fil d'exécution dans lequel un signal de mise à zéro est émis, aux moyens de sélection de fil d'exécution (36) de sélectionner une position de tête d'une zone de mémorisation des moyens CSE (17) attribuée à chaque fil d'exécution.

6. Dispositif selon la revendication 5, comprenant en outre
des moyens pour annuler la mémorisation d'une copie d'une entrée d'un CSE dans une entrée des moyens d'entrée de cible d'achèvement lorsqu'un fil d'exécution dans lequel un signal de mise à zéro est émis correspond à un fil d'exécution qui doit mémoriser la copie de l'entrée du CSE dans les moyens d'entrée de cible d'achèvement.

7. Dispositif selon la revendication 1, dans lequel
les moyens de sélection de fil d'exécution (36) ne sélectionnent pas un fil d'exécution non opérationnel.

8. Dispositif selon la revendication 1, dans lequel
les moyens de sélection de fil d'exécution (36) ne sélectionnent pas un fil d'exécution correspondant à un pipeline dans lequel un signal de mise à zéro est émis.

9. Dispositif selon la revendication 1, dans lequel
les moyens de sélection de fil d'exécution (36) ne sélectionnent pas un fil d'exécution dans lequel des entrées correspondantes sont toutes annulées.

10. Dispositif selon la revendication 1, comprenant en outre :
des premiers moyens de mise à zéro pour mettre à zéro les moyens formant registre d'un fil d'exécution dans lequel un signal de mise à zéro est émis vers un pipeline correspondant ; et
des deuxièmes moyens de mise à zéro pour mettre à zéro tous les moyens formant registre dans un cycle prédéterminé.

11. Dispositif selon la revendication 1, dans lequel
les moyens de sélection de fil d'exécution (36) sélectionnent un fil d'exécution qui n'a pas été sélectionné pendant un temps plus long.
